# EUROPEAN PATENT APPLICATION

(11) **EP 4 657 583 A1**
(43) Date of publication of application: **03.12.2025**
(21) Application number: 23938860.6
(22) Date of filing: 31.05.2023
(51) Int. Cl.: H01M 10/0525, H01M 10/0565, H01M 10/0566, H01M 10/056

(54) **SECONDARY BATTERY AND ELECTRICAL DEVICE COMPRISING SAME**

(71) Applicant: Contemporary Amperex Technology Co., Limited, Ningde, Fujian 352100 (CN)
(72) Inventor: WU, Lili, Ningde, Fujian 352100 (CN); JIN, Haizu, Ningde, Fujian 352100 (CN); CHEN, Xingbu, Ningde, Fujian 352100 (CN); LI, Xuan, Ningde, Fujian 352100 (CN); LIU, Rundie, Ningde, Fujian 352100 (CN); SUN, Xin, Ningde, Fujian 352100 (CN)
(74) Representative: Ziebig Hengelhaupt Intellectual Property Attorneys Patentanwaltskanzlei PartGmbB
(86) International application number: PCT/CN2023/097496
(87) International publication number: WO 2024/243869

(57) **Abstract**

The present application provides a secondary battery, which comprises at least two electrode sheets, wherein at least one electrode sheet comprises an intra-sheet electrolyte, the intra-sheet electrolyte comprises an intra-sheet gel electrolyte and an intra-sheet electrolytic solution, and the ratio R_{W} of the mass of an electrolyte salt in the intra-sheet gel electrolyte to the mass of an electrolyte salt in the intra-sheet electrolytic solution satisfies 1<R_{W}<9.

## Description

### TECHNICAL FIELD

The present application relates to the technical field of secondary batteries, and in particular, to a secondary battery and an electrical apparatus comprising the same.

### BACKGROUND

The description here merely provides background information related to the present application, and does not necessarily constitute the prior art.

With the acceleration of the pace of life and the development of various electronic products such as smart phones, tablets, smart wearables, electric tools, and electric vehicles, increasing importance is attached to composite indicators, such as cycling performance and battery rate, of secondary batteries.

On this basis, research on improving the comprehensive performance of secondary batteries is of great value.

### SUMMARY OF THE INVENTION

In view of the above problems, the present application provides a secondary battery and an electrical apparatus comprising the same. A gelatinous electrolyte and a liquid electrolyte are reasonably compatible in pores of at least one electrode plate of the secondary battery, which can significantly improve the battery rate and cycling performance, and is conducive to obtaining a secondary battery with superior comprehensive performance.

In a first aspect, the present application provides a secondary battery, comprising at least two electrode plates, wherein any one of the electrode plates comprises an active material layer arranged on at least one side of the electrode plate; an active material layer on at least one side of at least one of the electrode plates comprises active particles and an intra-plate electrolyte located in pores among the active particles; the intra-plate electrolyte comprises an intra-plate gelatinous electrolyte and an intra-plate electrolyte solution; the intra-plate gelatinous electrolyte and the intra-plate electrolyte solution each independently comprise an electrolyte salt, and a ratio R_{W} of mass of the electrolyte salt in the intra-plate gelatinous electrolyte to mass of the electrolyte salt in the intra-plate electrolyte solution satisfies 1<R_{W}<9.

A gelatinous/liquid composite electrolyte is arranged in pores of at least one electrode plate of the secondary battery, so that the intra-plate electrolyte comprises both a gelatinous electrolyte and a liquid electrolyte, which can, on the one hand, enhance ion channels among the active particles in the electrode plate, and reduce or avoid the extrusion of the liquid electrolyte caused by expansion and shrinkage of the electrode plate during charge-discharge, and can, on the other hand, reduce, by wrapping surfaces of an active material with the gelatinous electrolyte, direct contact between the active material and the liquid electrolyte, and then function to reduce the electrolyte solution consumption rate during cycles and to improve the battery life, so that the secondary battery can obtain better battery rate and cycling performance; and further reasonably regulates distribution mode of the electrolyte salt in the gelatinous/liquid composite electrolyte of the electrode plate in the gelatinous and liquid electrolytes, to form an intra-plate gelatinous/liquid composite electrolyte in the plate with a particular composite mode, so that mass of the electrolyte salt in the gelatinous electrolyte is higher than mass of the electrolyte salt in the electrolyte solution, that is, the electrolyte salt in the pores of the electrode plate is more distributed in the gelatinous electrolyte, thereby better compensating for the consumption and shortage of the electrolyte salt in the vicinity of the active material caused by extension of the cycle time, inhibiting deterioration of the cycling performance of the battery, significantly extending the cycle life of the secondary battery, and contributing to providing better battery rate performance in a longer cycle period.

In some embodiments, 1.2≤R_{W}≤8.5; and optionally, 1.5≤R_{W}≤8.5.

The electrolyte salt in the gelatinous/liquid composite electrolyte of the electrode plate can be regulated to have a more suitable distribution between the gelatinous state and the liquid state, which is thus conducive to better improving the cycle life of the secondary battery and the battery rate performance during long cycles.

In some embodiments, the active material layer on at least one side of at least one of the electrode plates is a multi-layer structure, and the intra-plate electrolyte is distributed in at least a portion of pores in an outside active layer of the multi-layer structure;
wherein, in the multi-layer structure of the active material layer, the outside active layer is farthest from center of the electrode plate along thickness direction of the electrode plate.

The multi-layer structure may be arranged in the active material layer of at least one of the electrode plates, and the intra-plate gelatinous/liquid composite electrolyte in the above particular gelatinous/liquid composite mode is at least distributed in the outside active layer, so that the intra-plate electrolyte solution provides better adsorption and polymerization effects and has a better impregnation rate on the active particles, which is conducive to improving the kinetic performance, and can further better exert the above effects on improving the battery rate and cycling performance.

In some embodiments, in the electrode plate having a multi-layer structure, porosity of the outside active layer is higher than porosity of the inside active layer; wherein the inside active layer is located inside the active material layer.

When the active material layer of the electrode plate has the multi-layer structure, on the premise that the outside active layer (or denoted as upper active layer) is provided with the above particular gelatinous/liquid compatible intra-plate gelatinous/liquid composite electrolyte, the porosity of the outside active layer can be further made higher than the porosity of the inside active layer. In this case, on the one hand, the outside active layer can be given higher kinetics with an improved charging window, and on the other hand, the surface of the active material layer can be more easily impregnated with liquid phase components of the electrolyte.

In some embodiments, at least one of the electrode plates is a negative electrode plate, an active material layer of the negative electrode plate is a negative electrode active material layer, and the negative electrode active material layer is located on at least one side of the negative electrode plate.

For the negative electrode plate that tends to undergo volume expansion during battery cycling, the pores in the discharge state are larger than the pores in the charge state. If the pores are not effectively filled with the electrolyte, broken bridges tend to be present, which deteriorates the electrical contact between the negative electrode active particles and the transport distance of active ions, and further deteriorates the rate discharge capacity. The intra-plate gelatinous/liquid composite electrolyte in the above particular composite mode may be at least arranged in the negative electrode active material layer of the negative electrode plate, and a portion of the electrolyte may be cured in the pores of the negative electrode active material layer to reduce or avoid the extrusion of the electrolyte solution among the active particles, thereby functioning to significantly inhibit the deterioration of the battery performance.

In some embodiments, the negative electrode active material layer comprises a negative electrode active material, the negative electrode active material comprises a silicon-based material;
optionally, mass proportion of the silicon-based material in the negative electrode active material is denoted as silicon content, the silicon content is greater than or equal to 3%; and
further optionally, the silicon content is 3% to 40%.

The negative electrode plate comprising the silicon-based material is conductive to balancing the high specific energy strategy of the battery, but aggravates the expansion. In this case, the expansion and shrinkage during the charge-discharge will be more obvious. The gelatinous/liquid composite electrolyte in the above particular composite mode is at least arranged in the negative electrode plate, thereby more significantly inhibiting the deterioration of the battery performance.

In some embodiments, the negative electrode active material layer has the above multi-layer structure, wherein the porosity of the outside active layer is 20% to 50%; further optionally 30% to 50%; and still further optionally 30% to 45%.

When the active material layer of the negative electrode plate has any one of the above multi-layer structures, porosity of the negative electrode outside active layer may be further regulated, which is more conducive to improving the kinetics and charging window, and is also conducive to more easily impregnating the surface of the negative electrode active material layer with the liquid phase components of the electrolyte.

In some embodiments, the negative electrode active material layer on any one side independently satisfies 2.4≤R_{W}/b1≤45, wherein b1 is porosity of the negative electrode active material layer on any one side;
optionally, 3.75≤R_{W}/b1≤36; and
further optionally, 7.5≤R_{w}/b1≤18.

In some embodiments, the porosity b1 of the negative electrode active material layer on any one side is independently 20% to 50%; and
optionally, the porosity b1 of the negative electrode active material layer on any one side is independently 25% to 45%; and
further optionally, the porosity b1 of the negative electrode active material layer on any one side is independently 25% to 40%.

For any one of the above negative electrode plates with the gelatinous/liquid composite electrolyte of the present application, the mass proportion R_{W} of the electrolyte salt in the gelatinous/liquid electrolyte on any one side of the negative electrode plate and the porosity b1 of the negative electrode plate may be regulated. The R_{W}/b1 is regulated to further optimize the compatibility between the electrolyte salt distribution mode and the electrode plate porosity of the negative electrode plate. On the one hand, the porosity b1 of the negative electrode plate is regulated to further optimize inward impregnation with the electrolyte solution. On the other hand, the R_{W} is regulated to further optimize the improvement on the cycle life of the secondary battery and the battery rate performance during long cycles, thereby comprehensively better improving the cycling performance, rate performance, and kinetic performance of the secondary battery.

In some embodiments, at least one of the electrode plates is a positive electrode plate, an active material layer of the positive electrode plate is a positive electrode active material layer, and the positive electrode active material layer is located on at least one side of the positive electrode plate.

Design of the gelatinous/liquid composite electrolyte in the above particular composite mode may be used for the positive electrode plate, thereby reducing or avoiding the extrusion of the electrolyte solution between particles, inhibiting the deterioration of the battery performance, extending the cycle life of the secondary battery, and facilitating providing better battery rate performance in a long cycle period.

In some embodiments, the positive electrode active material layer has the above multi-layer structure, wherein the porosity of the outside active layer is 10% to 40%; further optionally 15% to 40%; and still further optionally 20% to 35%.

When the active material layer of the positive electrode plate has any one of the above multi-layer structures, the porosity of the positive electrode outside active layer may be further regulated, which is more conducive to improving the kinetics and charging window, and is also conducive to more easily impregnating the surface of the positive electrode active material layer with the liquid phase components of the electrolyte.

In some embodiments, the positive electrode active material layer on any one side independently satisfies 3.75≤R_{W}/b2≤90, wherein b2 is porosity of the positive electrode active material layer on any one side;
optionally, 3.75≤R_{W}/b2≤60; and
further optionally, 4.2≤R_{W}/b2≤25.

In some embodiments, the porosity b2 of the positive electrode active material layer on any one side is independently 10% to 40%; and
optionally, the porosity b2 of the positive electrode active material layer on any one side is independently 10% to 35%; and
further optionally, the porosity b2 of the positive electrode active material layer on any one side is independently 15% to 35%.

For any one of the above positive electrode plates with the gelatinous/liquid composite electrolyte of the present application, the mass proportion R_{W} of the electrolyte salt in the gelatinous/liquid electrolyte on any one side of the positive electrode plate and the porosity b2 of the positive electrode plate may be regulated. The R_{W}/b2 is regulated to further optimize the compatibility between the electrolyte salt distribution mode and the electrode plate porosity of the positive electrode plate. On the one hand, the porosity b2 of the positive electrode plate is regulated to further optimize inward impregnation with the electrolyte solution. On the other hand, the R_{W} is regulated to further optimize the improvement on the cycle life of the secondary battery and the battery rate performance during long cycles, thereby comprehensively better improving the cycling performance, rate performance, and kinetic performance of the secondary battery.

In some embodiments, the secondary battery comprises the positive electrode plate, the negative electrode plate, and a separator arranged between the positive electrode plate and the negative electrode plate;
the positive electrode plate and the negative electrode plate satisfy one or two features below:
the negative electrode plate is as defined above; and
the positive electrode plate is as defined above.

One or both of the positive electrode plate and the negative electrode plate in the secondary battery may be designed to have the above intra-plate gelatinous/liquid composite electrolyte, thereby exerting the above advantages or achieving synergistic effects of the positive and negative electrode plates.

In some embodiments, the positive electrode plate comprises a positive electrode active material layer, the positive electrode active material layer comprises a positive electrode active material, the positive electrode active material comprises a lithium-ion material; and
optionally, the secondary battery is a lithium-ion secondary battery.

In some embodiments, the intra-plate electrolyte salt comprises an electrolyte lithium salt;
optionally, the electrolyte lithium salt is at least distributed in one or both of the intra-plate gelatinous electrolyte and the intra-plate electrolyte solution in a same electrode plate;
optionally, the electrolyte lithium salt is at least distributed in pores of the positive electrode active material layer; and
optionally, the negative electrode plate comprises a negative electrode active material layer, and the electrolyte lithium salt is at least distributed in pores of the negative electrode active material layer.

The particular design of the above intra-plate gelatinous/liquid composite electrolyte can be adapted to a lithium-ion secondary battery. Further, the intra-plate electrolyte salt may comprise an electrolyte lithium salt that is more compatible with active lithium ions, which promotes the efficient transport of the active lithium ions, and is conducive to making the secondary battery have better comprehensive performance in terms of the power density, cycle life, etc.

In a second aspect, the present application provides an electrical apparatus, comprising the secondary battery in the first aspect of the present application.

Details of one or more embodiments of the present application are presented in the drawings and description below. Other features, objectives, and advantages of the present application will become apparent from the specification, drawings, and claims.

### DESCRIPTION OF DRAWINGS

In order to better describe and illustrate the embodiments or examples of the applications disclosed herein, reference may be made to one or more of the figures. The additional details or examples used to describe the drawings should not be considered as limiting the scope of the disclosed applications, currently described embodiments or examples, and any one of currently understood preferred embodiments of these applications. Moreover, in all of the figures, identical parts are represented by identical reference numerals. In the figures:
FIG. 1 is a schematic diagram of a secondary battery in an embodiment of the present application;
FIG. 2 is an exploded view of the secondary battery in an embodiment of the present application shown in FIG. 1; and
FIG. 3 is a schematic diagram of an electrical apparatus in which a secondary battery is used as a power source in an embodiment of the present application.

Reference numerals in the figures:
5, Secondary battery; 51, Case; 52, Electrode assembly; 53, Cover plate; 6, Electrical apparatus.

### DETAILED DESCRIPTION

Some embodiments of a secondary battery and an electrical apparatus comprising the same of the present application are disclosed below with reference to the detailed description of drawings as appropriate. However, there may be cases where unnecessary detailed descriptions are omitted. For example, there are cases where detailed descriptions of well-known items and repeated descriptions of actually identical structures are omitted. This is to avoid unnecessary redundancy in the following descriptions and to facilitate understanding by those skilled in the art. In addition, the drawings and subsequent descriptions are provided for those skilled in the art to fully understand the present application, and are not intended to limit the subject matter recited in the claims.

"Ranges" disclosed in the present application are defined in the form of lower limits and upper limits, a given range is defined by the selection of a lower limit and an upper limit, and the selected lower limit and upper limit define boundaries of a particular range. A range defined in this manner may be inclusive or exclusive of end values, and may be arbitrarily combined, that is, any lower limit may be combined with any upper limit to form a range. For example, if the ranges of 60-120 and 80-110 are listed for a particular parameter, it is understood that the ranges of 60-110 and 80-120 are also contemplated. Additionally, if the minimum range values 1 and 2 are listed, and if the maximum range values 3, 4 and 5 are further listed, the following ranges are all contemplatable: 1-3, 1-4, 1-5, 2-3, 2-4, and 2-5. In the present application, unless stated otherwise, the numerical range "a-b" denotes an abbreviated representation of any combination of real numbers between a and b, where both a and b are real numbers. For example, the numerical range "0-5" means that all the real numbers between "0-5" have been listed herein, and "0-5" is just an abbreviated representation of combinations of these numerical values. In addition, when a parameter is expressed as an integer greater than or equal to 2, it is equivalent to listing that the parameter is, for example, an integer of 2, 3, 4, 5, 6, 7, 8, 9, 10, 11, 12, or the like. For example, when a parameter is expressed as an integer selected from "2-10", it is equivalent to listing an integer of 2, 3, 4, 5, 6, 7, 8, 9, and 10.

Unless otherwise particularly stated, all embodiments and optional embodiments of the present application may be combined with each other to form new technical solutions. Reference herein to an "embodiment" means that a particular feature, structure, or property described with reference to the embodiment may be included in at least one embodiment of the present application. The appearances of the phrase in various places in the specification neither necessarily refer to a same embodiment, nor are independent or alternative embodiments mutually exclusive from other embodiments. Those skilled in the art understand, both explicitly and implicitly, that the embodiments described herein may be combined with other embodiments. The "implementation" mentioned herein is understood similarly.

Unless otherwise particularly stated, all steps in the present application may be performed sequentially or may be performed randomly, and are preferably performed sequentially. For example, the method comprises steps (a) and (b), meaning that the method may comprise steps (a) and (b) performed sequentially, or may comprise steps (b) and (a) performed sequentially. For example, the reference to the method may further comprise step (c), which means that step (c) may be added to the method in any order, for example, the method may comprise steps (a), (b) and (c), or may comprise steps (a), (c) and (b), or may comprise steps (c), (a) and (b), and so on.

Unless otherwise particularly stated, the terms "including," "containing," and "comprising" mentioned in the present application may be open-ended, or may be closed-ended. For example, the "including" and "comprising" may mean that other unlisted members or temporal features may be further included or comprised, or only the listed members or temporal features may be included or comprised. The members include, for example, materials or components, structures, elements, or instruments; and non-limiting examples of the temporal features include, for example, actions, conditions for occurrence of the actions, timing, or states.

Unless otherwise particularly stated, the term "or" is inclusive in the present application. For example, the phrase "A or B" means "A, B, or both A and B." Further, the condition "A or B" is satisfied under any one of the following conditions: A is true (or present) and B is false (or absent); A is false (or absent) and B is true (or present); or both A and B are true (or present).

In the present application, unless otherwise specified, A (such as B) means that B is a non-limiting example of A, and may be understood as that A is not limited to B.

In the present application, unless otherwise specified, features or solutions corresponding to the "and/or" include any one of two or more then two of the above related listed items, and also include any and all combinations of the related listed items, wherein the any and all combinations include combinations of any two of the related listed items, any more of the related listed items, or all of the related listed items. For example, "A and/or B" means a group consisting of A, B, and "a combination of A and B". The "including A and/or B" may mean "including A, including B, and including A and B", or may mean "including A, including B, or including A and B", and may be properly understood based on a sentence comprising the same.

The "plurality" involved in the present application, unless otherwise specified, refers to a number greater than 2 or equal to 2. For example, the "one or more" means one or greater than or equal to two. It is understandable that when "any more" is involved, it refers to any suitable combination of a plurality of items, that is, a combination of "any more" items in a way without a conflict and capable of implementing the present application.

The "combination thereof", "any combination thereof', "any combination mode thereof", etc. used in the present application include all suitable combination modes of any two or any more than two of the listed items.

In the present application, the "suitable" in the "suitable combination mode," "suitable mode," "any suitable mode," etc. shall be subject to a technical solution capable of implementing the present application.

In the present application, the "preferable", "better", "preferred", and "suitable" are only used to describe an implementation or embodiment with better effects, and should be understood as that they do not constitute a limitation to the scope of protection of the present application. If a plurality of "preferable" appear in a technical solution, unless otherwise specified and in the case of no contradiction or mutually restrictive relationship, each "preferable" is independent.

In the present application, the "optionally" and "optional" mean dispensable, that is, they mean any one selected from two parallel solutions of "presence" or "absence." If a plurality of "optional" appear in a technical solution, unless otherwise specified and in the case of no contradiction or mutually restrictive relationship, each "optional" is independent.

In the present application, the "further," "still further," "particularly", etc. are used to describe an objective and show differences in content, but should not be construed as limiting the scope of protection of the present application.

In the present application, the terms such as "first," "second," "third," and "fourth" in the phrases such as "first aspect," "second aspect," "third aspect," and "fourth aspect" are used only for descriptive purposes, and can neither be construed as indicating or implying a relative importance or number, nor be construed as implicitly indicating the importance or number of indicated technical features. Moreover, the "first," "second," "third," "fourth," etc. only serve the purpose of non-exhaustive enumeration and description, and should be understood as that they do not constitute a closed limitation to the quantity.

In the present application, the term "room temperature" generally refers to a temperature of 4°C to 35°C, and may refer to 20°C±5°C. In some embodiments of the present application, the room temperature refers to a temperature of 20°C to 30°C, such as 25°C.

In the present application, if a unit involving a data range is only followed by the right endpoint, it means that the units of the left endpoint and the right endpoint are identical. For example, 3 to 5 h or 3-5 h both mean that the units of the left endpoint "3" and the right endpoint "5" are each h (hour).

The masses of relevant components mentioned in the specification of embodiments of the present application not only may refer to the contents of the components, but also may indicate a proportional relationship between the masses of the components. Therefore, as long as the contents of the relevant components are proportionally scaled up or scaled down according to the specification of the embodiments of the present application, all of the resulting contents are within the scope disclosed in the specification of the embodiments of the present application. Further, the mass described in the specification of the embodiments of the present application may be a mass unit well known in the chemical industry such as µg, mg, g, or kg.

In a charge-discharge state of a battery, due to deintercalation of active ions, a negative electrode plate and a positive electrode plate will expand and/or shrink. In the charge state, the negative electrode plate expands and the positive electrode shrinks. In the discharge state, the volume of the expanded negative electrode plate shrinks and the volume of the shrunken positive electrode plate increases. Pores are present between active particles of the electrode plates, and the pores of the electrode plates in the expansion state are larger than the pores of the electrode plates in the shrinkage state. During battery charge-discharge, pores of active particles of electrode plates of a conventional secondary battery are filled with an electrolyte solution. Expansion and shrinkage of the electrode plates tend to cause the extrusion of the liquid electrolyte in the pores of the electrode plates, and may further cause labile conductive channels among the active particles of the electrode plates. In addition, the direct contact between the electrolyte solution and the active particles tends to cause the consumption of the electrolyte solution, thereby resulting in less satisfactory charging-discharging rate performance and battery cycle life of the conventional secondary battery.

On this basis, **in the first aspect,** the present application provides a secondary battery, comprising at least two electrode plates, wherein at least one of the electrode plates comprises an intra-plate electrolyte, the intra-plate electrolyte comprises an intra-plate gelatinous electrolyte and an intra-plate electrolyte solution, and a ratio R_{W} of mass of the electrolyte salt in the intra-plate gelatinous electrolyte to mass of the electrolyte salt in the intra-plate electrolyte solution satisfies 1<R_{W}<9.

In the present application, unless otherwise specified, the secondary battery comprises a positive electrode plate and a negative electrode plate, thus comprising at least two electrode plates.

In the present application, any one of the electrode plates comprises an active material layer, and the active material layer is arranged on at least one side of the electrode plate, that is, the active material layer in the electrode plate may be arranged on one side or both sides of the electrode plate. When the active material layer is arranged on both sides of the electrode plate: a current collector may be arranged between the active material layer on both sides; composition of the active material layer on both sides may be identical or different; thickness of the active material layer on both sides may be identical or different; the number of structural layers of the active material layer on both sides may be identical or different; and when the number of structural layers on both sides is identical, the multi-layer structure on both sides may be identical or different in terms of parameters such as the composition and the thickness.

In the present application, unless otherwise specified, the "active material layer" comprises at least one of a positive electrode active material layer of the positive electrode plate and a negative electrode active material layer of the negative electrode plate, and may refer to the positive electrode active material layer or the negative electrode active material layer based on details. It is understandable that the positive electrode active material layer comprises a positive electrode active material, and the negative electrode active material layer comprises a negative electrode active material. It is understandable that in the case where the active material layer is a multi-layer structure, the active material layer comprises a plurality of active layers, and any one of the active layers independently comprises a corresponding active material.

In the present application, unless otherwise specified, the electrode plate may be the positive electrode plate or the negative electrode plate, and the "active material" in the electrode plate refers to a substance capable of reversibly intercalating and deintercalating active ions. The active material is generally granular, and therefore is also referred to as "active particle". Unless otherwise specified, the "negative electrode active material" refers to a substance used for a negative electrode plate and capable of reversibly intercalating and deintercalating active ions, and is also referred to as negative electrode active material or negative electrode active particle; and the "positive electrode active material" refers to a substance used for a positive electrode plate and capable of reversibly deintercalating and intercalating active ions, and is also referred to as positive electrode active material or positive electrode active particle. During charging of the secondary battery, the active ions are deintercalated from the positive electrode, and are intercalated into the negative electrode through the electrolyte; while during discharging of the secondary battery, the active ions are deintercalated from the negative electrode, and are intercalated into the positive electrode. The active ions are not particularly limited.

In the present application, non-restrictively, the active ions may comprise at least one of lithium ions, sodium ions, and potassium ions, and further, the active ions may be lithium ions, sodium ions, or a combination thereof. When the active ions are mainly lithium ions (such as a molar proportion of more than 80%), they correspond to a lithium-ion secondary battery. When the active ions are mainly sodium ions (such as a molar proportion of more than 80%), they correspond to a sodium-ion secondary battery.

In the present application, the "active material" and the "active material" have the same meaning and can be used interchangeably. The active material is generally granular, and may also be referred to as "active particle"; the "positive electrode active material" and the "positive electrode active material" have the same meaning and can be used interchangeably; and the "negative electrode active material" and the "negative electrode active material" have the same meaning and can be used interchangeably.

In the present application, unless otherwise specified, the secondary battery comprises an electrolyte, and at least a portion of the electrolyte is arranged inside at least one of the electrode plates and is located in the pores among the active particles in the electrode plate where it is located. Ions can be isolated from the electrolyte under the action of voltage, and the electrolyte functions to conduct the active ions. The electrolyte inside at least one of the electrode plates is a mixture of a gelatinous electrolyte and a liquid electrolyte. Further, forms of the electrolyte distributed inside other electrode plates are not particularly limited, and may be liquid, gel, or fully solid. In the present application, unless otherwise specified, the electrolyte distributed inside the electrode plate is referred to as the "intra-plate electrolyte". In the present application, the electrolyte comprising a mixture of the gelatinous electrolyte and the liquid electrolyte is referred to as the "gelatinous/liquid composite electrolyte", and the gelatinous/liquid composite electrolyte located in the electrode plate is also denoted as the "intra-plate gelatinous/liquid composite electrolyte".

In the present application, the "gelatinous electrolyte" is a semi-solid electrolyte characterized by: comprising a gel skeleton, a gelling solvent located in a gel skeleton region, and an electrolyte salt dissolved in the gelling solvent. The gel skeleton is a crosslinked polymer with a three-dimensional network structure; the gelling solvent is bound in grid of the gel skeleton and cannot flow freely, so that the electrolyte in the gel skeleton region presents a gelatinous semi-solid state; and the electrolyte solvent in the gelatinous electrolyte is dissolved in the gelling solvent, and fails to migrate freely in the entire gelatinous electrolyte, but can move in a short range within a confined space of the grid in the gel skeleton. In addition, the gelling solvent has certain continuous distribution in the gel skeleton, so that the gelatinous electrolyte can still conduct active ions. In addition, chain segments between adjacent crosslinking points in the gel skeleton still have certain flexibility, so that the network structure not only has certain support, but also has certain elasticity. However, the chain segments between these crosslinking points are restricted between corresponding nodes of the grid, and fail to diffuse freely in the solvent like free molecules. Therefore, the gelatinous electrolyte has both solidity of the gel skeleton and restricted mobile phase of the gelling solvent in the physical form, which is significantly distinguished from a conventional electrolyte solution that can flow freely and has no fixed shape.

In the present application, the "liquid electrolyte" is an electrolyte in a liquid state, comprising an electrolyte salt and a solvent, wherein the solvent can flow freely, and the electrolyte salt dissolved in the solvent can migrate freely. The liquid electrolyte can flow freely as a whole and has no fixed shape.

In the gelatinous electrolyte, the electrolyte presents a colloidal state, wherein the electrolyte salt is bound in the gelatinous electrolyte and has a low migration capacity; while in the liquid electrolyte, the electrolyte presents a liquid state, wherein the electrolyte salt can be free in the liquid electrolyte and has a strong migration capacity. In the electrode plate of the present application, the electrolyte salt in the gelatinous electrolyte and the liquid electrolyte has less or no cross migration, which is substantially negligible. The above cross migration comprises the electrolyte salt in the gelatinous electrolyte that is freed from being bound to lithium and migrates into the liquid electrolyte to form a free state, and further comprises the electrolyte salt in the liquid electrolyte that migrates into the gelatinous electrolyte and is bound.

In the present application, unless otherwise specified, the "crosslinked polymer" has the well-known meaning in the technical field of macromolecules, has a three-dimensional network structure, and can produce certain degree of swelling in a corresponding solvent, but will not be dissolved. The degree of swelling depends on the degree of crosslinking of the crosslinked polymer.

In the secondary battery provided in the first aspect of the present application, at least one of the electrode plates has the gelatinous electrolyte and the liquid electrolyte that are reasonably compatible, the problem that the electrolyte is extruded out due to the electrode plate expansion is significantly inhibited, and the function of the liquid electrolyte in conducting active ions is still retained, which can significantly improve the battery rate and cycling performance, and is conducive to obtaining a secondary battery with superior comprehensive performance.

In some embodiments, a secondary battery is provided, comprising at least two electrode plates, wherein any one of the electrode plates comprises an active material layer arranged on at least one side of the electrode plate; an active material layer on at least one side of at least one of the electrode plates comprises active particles and an intra-plate electrolyte located in pores among the active particles; the intra-plate electrolyte comprises an intra-plate gelatinous electrolyte and an intra-plate electrolyte solution; the intra-plate gelatinous electrolyte and the intra-plate electrolyte solution each independently comprise an electrolyte salt, and a ratio R_{W} of mass of the electrolyte salt in the intra-plate gelatinous electrolyte to mass of the electrolyte salt in the intra-plate electrolyte solution satisfies 1<R_{W}<9.

In the present application, unless otherwise specified, the intra-plate gelatinous/liquid composite electrolyte satisfying 1<R_{W}<9 is referred to as the "gelatinous/liquid composite electrolyte of the present application".

Both the gelatinous electrolyte and the liquid electrolyte are arranged in pores of the electrode plate of the secondary battery, which can, on the one hand, enhance ion channels among the active particles in the electrode plate, and reduce or avoid the extrusion of the liquid electrolyte caused by expansion and shrinkage of the electrode plate during charge-discharge, and can, on the other hand, reduce, by wrapping surfaces of an active material with the gelatinous electrolyte, direct contact between the active material and the liquid electrolyte, and then function to reduce the electrolyte solution consumption rate during cycles and to improve the battery life, so that the secondary battery can obtain better battery rate and cycling performance; and further reasonably regulates the electrolyte salt distribution in the gelatinous electrolyte and the liquid electrolyte of the electrode plate, so that mass of the electrolyte salt in the gelatinous electrolyte is higher than mass of the electrolyte salt in the electrolyte solution, that is, the electrolyte salt in the pores of the electrode plate is more distributed in the gelatinous electrolyte, thereby better compensating for the consumption and shortage of the electrolyte salt in the vicinity of the active material caused by extension of the cycle time, inhibiting deterioration of the cycling performance of the battery, significantly extending the cycle life of the secondary battery, and contributing to providing better battery rate performance in a longer cycle period.

In the context of the present application, parameters, such as mass, volume, and element distribution, of the gelatinous electrolyte in the electrode plate can be tested and analyzed by a focused electron beam (FIB) technology, a scanning electron microscope (SEM), and an elemental analysis technology, for example, may be obtained by cryo-focused electron beam (FIB) serial sectioning, cross-sectional SEM observation of appearance, energy dispersive spectroscopy (EDS)-element energy spectrum, and analysis using three-dimensional reconstruction analysis software. For example, a cryo-focused ion beam (FIB) is used to perform fine sectioning on the sample (the smallest size may achieve nanoscale slices) to separate a first gel electrolyte sample and a second gel electrolyte sample. The appearance, structure, and element distribution of the cross section of each layer may be further analyzed under FIB serial sectioning using the scanning electron microscope (SEM), and a three-dimensional structure of the sample may be reconstructed using three-dimensional structure reconstruction software, to estimate the mass and/or volume of the to-be-tested sample. An active material layer sample of the electrode plate may be obtained by disassembling the battery, and the intra-plate electrolyte may be further analyzed by: reconstructing the three-dimensional structure of the sample using nano-spatial dynamic resolution and layerwise sectioning technology of FIB-SEM, analyzing the distribution and proportion of each element by EDS-element energy spectrum, finally analyzing the pore distribution, volume distribution, and mass distribution of each component through quantitative analysis using software, and further obtaining values of parameters such as porosity, pore size, mass, volume, and thickness based on the total mass, total volume, total thickness, and other parameter values of the sample. The following parameters in the context can all be tested and analyzed by the above combined technology: the mass and volume of the active material layer of the electrode plate, the porosity b of the electrode plate (the porosity b of the electrode plate corresponds to the porosity of the corresponding active material layer, may be the porosity b1 of the negative electrode active material layer or the porosity b2 of the positive electrode active material layer), the mass, volume, physical form (gelatinous and/or liquid state) of the intra-plate electrolyte and the electrolyte salt distribution mode in the electrode plate, the mass of the electrolyte salt in the intra-plate gelatinous electrolyte, the mass of the electrolyte salt in the intra-plate liquid electrolyte, the ratio R_{W} of the mass of the electrolyte salt in the intra-plate gelatinous electrolyte to the mass of the electrolyte salt in the intra-plate electrolyte solution in the electrode plate, ratio R_{W1} of the mass of the electrolyte salt in the intra-plate gelatinous electrolyte in the pores of the negative electrode active material layer relative to the mass of the electrolyte salt in the intra-plate electrolyte solution in the pores of the negative electrode active material layer, and ratio R_{W2} of the mass of the electrolyte salt in the intra-plate gelatinous electrolyte in the pores of the positive electrode active material layer relative to the mass of the electrolyte salt in the intra-plate electrolyte solution in the pores of the positive electrode active material layer, and the mass, volume, thickness, and porosity of each sub-layer of the active material layer having the multi-layer structure. As a non-limiting example, the above parameters may be tested and analyzed using FEI Scios 2HiVac device.

In the present application, the terms "first" and "second" in the "first gel electrolyte" and the "second gel electrolyte" are used only for descriptive purposes, and can neither be construed as indicating or implying a relative importance or number, nor be construed as implicitly indicating the importance or number of indicated technical features.

In an electrode plate, the ratio of the mass of the electrolyte salt in the intra-plate gelatinous electrolyte to the mass of the electrolyte salt in the intra-plate electrolyte solution is denoted as R_{W}. In this case, the intra-plate electrolyte in the electrode plate comprises a gelatinous/liquid composite electrolyte. In the present application, unless otherwise specified, 1<R_{W}<9.

In some embodiments, 1.2≤R_{W}≤8.5; and optionally, 1.5≤R_{W}≤8.5. Or, the R_{W} may be any one of the following values, or may be greater than or equal to any one of the following values, or may be greater than or equal to any one of the following values and less than 9, or may be greater than 1 and less than or equal to any one of the following values, or may be selected from an interval consisting of any two of the following values: 1.05, 1.1, 1.2, 1.25, 1.3, 1.4, 1.5, 1.6, 1.8, 2, 2.5, 3, 3.5, 3.9, 4.0, 4.1, 4.5, 5, 5.5, 6, 6.3, 6.5, 7, 7.5, 8, 8.4, 8.5, 8.6, 8.7, 8.8, 8.9, etc. As a non-limiting example, the R_{W} may be further selected from any one of the following ranges: 1<R_{W}≤8.9, 1<R_{W}≤8.5, 1<R_{W}≤8.0, 1.2<R_{W}≤8.9, 1.2<R_{W}≤8.5, 1.2<R_{W}≤8.0, 1.5<R_{W}≤8.9, 1.5<R_{W}≤8.5, 1.5<R_{W}≤8.0, 1.2≤R_{W}≤8.9, 1.2≤R_{W}≤8.5, 1.2≤R_{W}≤8.0, 1.5≤R_{W}≤8.9, 1.5≤R_{W}≤8.5, 1.5≤R_{W}≤8.0, 4.0≤R_{W}≤8.9, 4.0≤R_{W}≤8.5, 4.0≤R_{W}≤8.0, etc.

In the electrode plate with the gelatinous/liquid composite electrolyte, the electrolyte salt in the gelatinous/liquid composite electrolyte of the electrode plate can be regulated to have a more suitable distribution between the gelatinous state and the liquid state, which is thus conducive to better improving the cycle life of the secondary battery and the battery rate performance during long cycles.

The electrode plate comprising the above gelatinous/liquid composite electrolyte may be only the positive electrode plate or only the negative electrode plate, or may be a combination of the positive electrode plate and the negative electrode plate.

Compared with the case where the intra-plate gelatinous/liquid composite electrolyte is only arranged in the positive electrode plate, at least arrangement of the intra-plate gelatinous/liquid composite electrolyte in the negative electrode plate has better improvement on the comprehensive effects of the battery rate and the cycling performance. Arrangement of the intra-plate gelatinous/liquid composite electrolyte in each of the positive electrode plate and the negative electrode plate can have a synergistic effect, and is better than the case of arrangement separately in the positive electrode plate or arrangement separately in the negative electrode plate.

In some embodiments, the active material layer on at least one side of at least one of the electrode plates is a multi-layer structure, and the intra-plate electrolyte is distributed in at least a portion of pores in an outside active layer of the multi-layer structure; (the intra-plate electrolyte here comprises the intra-plate gelatinous electrolyte and the intra-plate electrolyte solution mentioned above);
wherein, in the multi-layer structure of the active material layer, the outside active layer is farthest from center of the electrode plate along thickness direction of the electrode plate.

For any one electrode plate in the secondary battery, the active material layer on any one side may independently be a monolayer structure or may independently be a multi-layer structure. When the active material layer is a monolayer structure, material composition along the thickness direction may be substantially consistent, or may have a continuous change. In this case, various parts of the monolayer structure may be formed synchronously in a same process. When the active material layer is a multi-layer structure, material composition along the thickness direction has an obviously discontinuous change, for example, may have an observable interlayer interface. In this case, different structural layers may be formed respectively through different processes. The interlayer interface of the multi-layer structure may be observed using a known cross-section analysis method, for example, observed under a scanning electron microscope (SEM).

When an active material layer is a multi-layer structure, the thickness, porosity, and composition of each active layer in the active material layer may be independently identical or different.

In the present application, unless otherwise specified, the "outside active layer" refers to a structural layer farthest from the thickness center in the active material layer of the electrode plate, and usually refers to, when a current collector is present in the electrode plate, a structural layer farthest from the current collector in the active material layer. Unless otherwise specified, the "inside active layer" refers to rest part in the active material layer except for the outside active layer, and may be directly stacked on the current collector, or other structural layers comprising no active material may be further arranged between the inside active layer and the current collector. The inside active layer may comprise one or more active layers.

In the present application, when the electrode plate comprises the current collector, the position of the current collector in the thickness direction of the electrode plate may be regarded as the "electrode plate center" position of the electrode plate in the thickness direction of the electrode plate. When the active material layer of the electrode plate is arranged on one side or both sides of the current collector, the "farthest from the center of the electrode plate" refers to farthest from the current collector. In this case, "the outside active layer is located on at least one side surface of the active material layer farthest from the center of the electrode plate along the thickness direction of the electrode plate" means that the outside active layer is located on at least one side surface of the active material layer farthest from the current collector along the thickness direction of the electrode plate.

The multi-layer structure may be arranged in the active material layer of at least one of the electrode plates, and the intra-plate gelatinous/liquid composite electrolyte in the above particular gelatinous/liquid composite mode is at least distributed in the outside active layer (the inside active layer may comprise or not comprise the gelatinous/liquid composite electrolyte), so that the intra-plate electrolyte solution provides better adsorption and polymerization effects and has a better impregnation rate on the active particles, which is conducive to improving the kinetic performance, and can further better exert the above effects on improving the battery rate and cycling performance.

When an electrode plate has a multi-layer structure, compared with the arrangement of the gelatinous/liquid composite electrolyte merely in the inside active layer, the at least arrangement of the gelatinous/liquid composite electrolyte in the outside active layer has better improvement on the comprehensive effects of the battery rate and the cycling performance.

Only the positive electrode active material layer may be a multi-layer structure. Or, only the negative electrode active material layer may be a multi-layer structure. Or, the positive electrode active material layer and the negative electrode active material layer may each be a multi-layer structure.

The negative electrode plate may independently be a multi-layer structure. In this case, the negative electrode active material layer comprises a plurality of negative electrode active layers, and each of the negative electrode active layers independently comprises a negative electrode active material. The outside active layer in the negative electrode active material layer may be denoted as the negative electrode outside active layer, and the inside active layer in the negative electrode plate may be denoted as the negative electrode inside active layer.

The positive electrode plate may independently be a multi-layer structure. In this case, the positive electrode active material layer comprises a plurality of positive electrode active layers, and each of the positive electrode active layers independently comprises a positive electrode active material. The outside active layer in the positive electrode active material layer may be denoted as the positive electrode outside active layer, and the inside active layer in the positive electrode plate may be denoted as the positive electrode inside active layer.

In some embodiments, the negative electrode active material layer is a multi-layer structure, and the gelatinous/liquid composite electrolyte is at least distributed in the negative electrode outside active layer.

In some embodiments, the positive electrode active material layer is a multi-layer structure, and the gelatinous/liquid composite electrolyte is at least distributed in the positive electrode outside active layer.

In some embodiments, the gelatinous/liquid composite electrolyte is only distributed in the negative electrode outside active layer, but is neither distributed in the negative electrode inside active layer, nor distributed in the positive electrode plate. In some other embodiments, the gelatinous/liquid composite electrolyte is only distributed in the positive electrode outside active layer, but is neither distributed in the positive electrode inside active layer, nor distributed in the negative electrode plate. In some other embodiments, the gelatinous/liquid composite electrolyte is distributed in both the negative electrode outside active layer and the positive electrode outside active layer.

In some embodiments, in the electrode plate having a multi-layer structure, porosity of the outside active layer is higher than porosity of the inside active layer; wherein the inside active layer is located inside the active material layer.

In some embodiments, the negative electrode active material layer is a multi-layer structure, and porosity of the negative electrode outside active layer is higher than porosity of the negative electrode inside active layer.

In some embodiments, the positive electrode active material layer is a multi-layer structure, and porosity of the positive electrode outside active layer is higher than porosity of the positive electrode inside active layer.

In some embodiments, the negative electrode active material layer and the positive electrode active material layer are each a multi-layer structure, the porosity of the negative electrode outside active layer is higher than the porosity of the negative electrode inside active layer, and the porosity of the positive electrode outside active layer is higher than the porosity of the positive electrode inside active layer.

When the active material layer of the electrode plate has a multi-layer structure, on the premise that the outside active layer is provided with the above particular gelatinous/liquid compatible intra-plate gelatinous/liquid composite electrolyte, the porosity of the outside active layer can be further made higher than the porosity of the inside active layer. In this case, on the one hand, the outside active layer can be given higher kinetics with an improved charging window, and on the other hand, the surface of the active material layer can be more easily impregnated with liquid phase components of the electrolyte.

In the present application, when the porosity of an electrode plate is involved, unless otherwise specified, it refers to the porosity of the active material layer in the electrode plate, and refers to the percentage of the sum of volumes of the pores between the material particles in the active material layer relative to the apparent total volume of the active material layer without considering the intra-plate electrolyte. In the case where the intra-plate electrolyte is included, the volume occupied by the intra-plate electrolyte is regarded as a part of the pore volume in the active material layer.

In a charge-discharge state of a battery, due to deintercalation of active ions, a negative electrode plate and a positive electrode plate will expand and/or shrink, wherein the expansion and shrinkage of the negative electrode plate have greater influence on the battery performance. The negative electrode plate expands in the charge state, and the volume of the negative electrode plate shrinks in the discharge state. Pores are present between negative electrode active particles of the negative electrode plate. Expansion and shrinkage of the negative electrode plate tend to cause the extrusion of the liquid electrolyte in the pores of the negative electrode plate, and may further cause labile ion channels among the active particles in the negative electrode plate. In addition, the direct contact between the electrolyte solution and the active particles tends to cause the consumption of the electrolyte solution, thereby resulting in less satisfactory charging-discharging rate performance and battery cycle life of the conventional secondary battery.

In some embodiments, at least one of the electrode plates is a negative electrode plate, an active material layer of the negative electrode plate is a negative electrode active material layer, and the negative electrode active material layer is located on at least one side of the negative electrode plate. In this case, the negative electrode plate comprises the above gelatinous/liquid composite electrolyte. The negative electrode active material layer may be located on one side or both sides of the negative electrode plate.

For the negative electrode plate that tends to undergo volume expansion during battery cycling, the pores in the discharge state are larger than the pores in the charge state. If the pores are not effectively filled with the electrolyte, broken bridges tend to be present, which deteriorates the electrical contact between the negative electrode active particles and the transport distance of active ions, and further deteriorates the rate discharge capacity. The intra-plate gelatinous/liquid composite electrolyte in the above particular composite mode may be at least arranged in the negative electrode active material layer of the negative electrode plate, and a portion of the electrolyte may be cured in the pores of the negative electrode active material layer to reduce or avoid the extrusion of the electrolyte solution among the active particles, thereby functioning to significantly inhibit the deterioration of the battery performance.

In some embodiments, the negative electrode active material layer comprises a negative electrode active material, and the negative electrode active material comprises a silicon-based material.

Mass proportion of the silicon-based material in the negative electrode active material is denoted as silicon content. In some embodiments, the silicon content is greater than or equal to 3%. In some embodiments, the silicon content is less than or equal to 40%. In some embodiments, the silicon content is 3% to 40% (the two endpoint values may be independently included or excluded). Or, the silicon content may be any one of the following mass percentages, or may be selected from an interval consisting of any two of the following mass percentages: 3%, 4%, 5%, 6%, 8%, 10%, 12%, 15%, 16%, 18%, 20%, 25%, 30%, 35%, 40%, etc.

In some embodiments, the silicon-based material may include one or more of elemental silicon, a silicon-oxygen compound, a silicon-carbon composite, a silicon-nitrogen composite, a silicon alloy, and the like.

The silicon-based material, e.g., silicon, has a capacity that is about 10 times higher than that of graphite, and thus can achieve higher energy density. The silicon-based material has the advantages, such as low costs and high specific capacity, and is a highly favored negative electrode material. The negative electrode plate comprising the silicon-based material is conductive to balancing the high specific energy strategy of the battery, but in this case, the expansion and shrinkage during the charge-discharge will be more obvious, and the gelatinous/liquid composite electrolyte in the above particular composite mode can more significantly inhibit the deterioration of the battery performance.

The negative electrode plate comprising the silicon-based material is conductive to balancing the high specific energy strategy of the battery, but aggravates the expansion. In this case, the expansion and shrinkage during the charge-discharge will be more obvious. The gelatinous/liquid composite electrolyte in the above particular composite mode is at least arranged in the negative electrode plate, thereby more significantly inhibiting the deterioration of the battery performance. Further, controlling the silicon content within a more suitable range can achieve a better balance between the high specific energy strategy of the battery and good functioning of the battery performance.

In some embodiments, the negative electrode active material layer has the above multi-layer structure (which may be any one of the suitable multi-layer structures mentioned above), wherein the porosity of the outside active layer (i.e., the negative electrode outside active layer) is 20% to 50%; further optionally 30% to 50%; still further optionally 30% to 45%. Or, the porosity of the outside active layer may be any one of the following percentages, or may be independently selected from an interval consisting of two of the following percentages: 20%, 25%, 30%, 35%, 40%, 45%, 50%, etc.

When the negative electrode active material layer has any one of the above multi-layer structures, the porosity of the negative electrode outside active layer may be further regulated, which is more conducive to improving the kinetics and charging window, and is also conducive to more easily impregnating the surface of the negative electrode active material layer with the liquid phase components of the electrolyte.

In some embodiments, the R_{W} of the negative electrode active material layer on any one side may be additionally denoted as R_{W1}, and the negative electrode active material layer on any one side independently satisfies 2.4≤R_{W}/b1≤45, wherein b1 is porosity of the negative electrode active material layer on any one side. Or, the R_{W}b1 may be any one of the following values, or may be selected from an interval consisting of any two of the following values: 2.4, 2.5, 3, 3.5, 3.75, 4, 4.5, 5, 5.5, 6, 6.5, 7, 7.5, 8, 8.5, 9, 9.5, 10, 11, 12, 12.5, 13, 14, 15, 16, 18, 20, 25, 30, 35, 36, 37.5, 38, 40, 45, etc. Non-restrictively, the R_{W}/b1 on any one side independently may be selected from any one of the following ranges: 3.75≤R_{W}/b1≤36, 7.5≤R_{W}/b1≤18, etc.

In some embodiments, the porosity b1 of the negative electrode active material layer on any one side may be independently 20% to 50%, or may be any one of the following percentages, or may be selected from an interval consisting of two of the following percentages: 20%, 25%, 30%, 35%, 40%, 45%, 50%, etc. Or, the porosity b1 of the negative electrode active material layer on any one side may be selected from any one of the following ranges: 25% to 45%, 25% to 40%, etc.

In the present application, when "any one side" is involved, unless otherwise specified, it refers to at least one side; while when the described object is located on both sides, the "any one side" may be a single side or double sides, and when both sides satisfy the described characteristics, the characteristics of both sides may be identical or different.

For any one of the above negative electrode plates with the gelatinous/liquid composite electrolyte of the present application, the mass proportion R_{W} (or additionally denoted as R_{W1}) of the electrolyte salt in the gelatinous/liquid electrolyte on any one side of the negative electrode plate and the porosity (b1) of the negative electrode plate may be regulated. The R_{W}/b1 is regulated to further optimize the compatibility between the distribution mode of the electrolyte lithium salt and the electrode plate porosity of the negative electrode plate. On the one hand, the porosity b1 of the negative electrode plate is regulated to further optimize inward impregnation with the electrolyte solution. On the other hand, the R_{W} is regulated to further optimize the improvement on the cycle life of the secondary battery and the battery rate performance during long cycles, thereby comprehensively better improving the cycling performance, rate performance, and kinetic performance of the secondary battery.

In some embodiments, at least one of the electrode plates is a positive electrode plate, an active material layer of the positive electrode plate is a positive electrode active material layer, and the positive electrode active material layer is located on at least one side of the positive electrode plate. In this case, the positive electrode plate comprises the above gelatinous/liquid composite electrolyte. The positive electrode active material layer may be located on one side or both sides of the positive electrode plate.

Design of the gelatinous/liquid composite electrolyte in the above particular composite mode may be used for the positive electrode plate, thereby reducing or avoiding the extrusion of the electrolyte solution between particles, inhibiting the deterioration of the battery performance, extending the cycle life of the secondary battery, and facilitating providing better battery rate performance in a long cycle period.

In some embodiments, the positive electrode active material layer has the above multi-layer structure (which may be any one of the suitable multi-layer structures mentioned above), wherein the porosity of the outside active layer (i.e., the positive electrode outside active layer) is 10% to 40%; further optionally 15% to 40%; still further optionally 20% to 35%.

When the active material layer of the positive electrode plate has the above multi-layer structure, the porosity of the positive electrode outside active layer may be further regulated, which is more conducive to improving the kinetics and charging window, and is also conducive to more easily impregnating the surface of the positive electrode active material layer with the liquid phase components of the electrolyte.

In some embodiments, the R_{W} of the positive electrode active material layer on any one side may be additionally denoted as R_{W2}, and the R_{W} on any one side independently satisfies 3.75≤R_{W}/b2≤90, wherein b2 is porosity of the positive electrode active material layer. Or, the R_{W}/b2 may be any one of the following values, or may be selected from an interval consisting of any two of the following values: 3.75, 4, 4.5, 5, 5.5, 6, 6.5, 7, 7.5, 8, 8.5, 9, 9.5, 10, 11, 12, 12.5, 13, 14, 15, 16, 18, 20, 25, 30, 35, 36, 37.5, 38, 40, 45, 50, 55, 60, 65, 70, 75, 80, 85, 90, etc. Non-restrictively, the R_{W}/b2 on any one side independently may be selected from any one of the following ranges: 3.75≤R_{W}/b2≤60, 4.2≤R_{W}/b2≤25, etc.

In some embodiments, the porosity b2 of the positive electrode active material layer on any one side may be independently 10% to 40%, or may be any one of the following percentages, or may be selected from an interval consisting of two of the following percentages: 10%, 15%, 20%, 25%, 30%, 35%, 40%, etc. Or, the porosity b2 of the positive electrode active material layer on any one side may be selected from any one of the following ranges: 10% to 35%, 15% to 35%, etc.

For any one of the above positive electrode plates with the gelatinous/liquid composite electrolyte of the present application, the mass proportion R_{W} (or additionally denoted as R_{W2}) of the electrolyte salt in the gelatinous/liquid electrolyte thereof and the porosity (b2) of the positive electrode plate may be regulated. The R_{W}/b2 is regulated to further optimize the compatibility between the electrolyte salt distribution mode and the electrode plate porosity of the positive electrode plate. On the one hand, the porosity b2 of the positive electrode plate is regulated to further optimize inward impregnation with the electrolyte solution. On the other hand, the R_{W} is regulated to further optimize the improvement on the cycle life of the secondary battery and the battery rate performance during long cycles, thereby comprehensively better improving the cycling performance, rate performance, and kinetic performance of the secondary battery.

In some embodiments, the secondary battery comprises the positive electrode plate, the negative electrode plate, and a separator arranged between the positive electrode plate and the negative electrode plate;
the positive electrode plate and the negative electrode plate satisfy one or two features below:
the negative electrode plate is as defined above; and
the positive electrode plate is as defined above.

One or both of the positive electrode plate and the negative electrode plate in the secondary battery may be designed to have the above intra-plate gelatinous/liquid composite electrolyte, thereby exerting the above advantages or achieving synergistic effects of the positive and negative electrode plates.

In some embodiments, the positive electrode plate comprises a positive electrode active material layer, the positive electrode active material layer comprises a positive electrode active material, and the positive electrode active material comprises a lithium-ion material.

In some embodiments, the secondary battery is a lithium-ion secondary battery.

In some embodiments, the intra-plate electrolyte salt comprises an electrolyte lithium salt.

In some embodiments, the electrolyte lithium salt is at least distributed in one or both of the intra-plate gelatinous electrolyte and the intra-plate electrolyte solution in a same electrode plate.

In some embodiments, the electrolyte lithium salt is at least distributed in pores of the positive electrode active material layer.

In some embodiments, the negative electrode plate comprises a negative electrode active material layer, and the electrolyte lithium salt is at least distributed in pores of the negative electrode active material layer.

The particular design of the above intra-plate gelatinous/liquid composite electrolyte can be adapted to a lithium-ion secondary battery. Further, the intra-plate electrolyte salt may comprise an electrolyte lithium salt that is more compatible with active lithium ions, which promotes the efficient transport of the active lithium ions, and is conducive to making the secondary battery have better comprehensive performance in terms of the power density, cycle life, etc.

In an embodiment of the present application, the secondary battery comprises the positive electrode plate, the negative electrode plate, and the electrolyte. During charge-discharge of the battery, active ions are intercalated and deintercalated back and forth between the positive electrode plate and the negative electrode plate. The electrolyte serves for conducting the active ions between the positive electrode plate and the negative electrode plate.

In an embodiment of the present application, the secondary battery comprises the positive electrode plate, the negative electrode plate, the electrolyte, and the separator. During charge-discharge of the battery, the active ions are intercalated and deintercalated back and forth between the positive electrode plate and the negative electrode plate. The electrolyte serves for conducting the active ions between the positive electrode plate and the negative electrode plate. The separator is provided between the positive electrode plate and the negative electrode plate, and mainly functions to prevent a short circuit between the positive electrode and the negative electrode, while allowing active ions to pass through.

The type of the active ions may be as described above.

### Electrolyte

The electrolyte serves for conducting ions between the positive electrode plate and the negative electrode plate, and may transport the active ions.

The electrolyte in the secondary battery provided in the present application at least comprises the above intra-electrode electrolyte, which is distributed in the active material layer on at least one side of at least one of the electrode plates. The above gelatinous/liquid composite electrolyte is arranged in the active material layer on at least one side of at least one of the electrode plates.

The electrolyte in the secondary battery provided in the present application at least comprises the following physical states: a gel state and a liquid state. In the present application, the electrolyte in the gel state is denoted as the gelatinous electrolyte, and the electrolyte in the liquid state is denoted as the liquid electrolyte or the electrolyte solution. At least a portion of the gelatinous electrolyte is located in the active material layer of the electrode plate, and the gelatinous electrolyte located in the electrode plate is denoted as the intra-plate gelatinous electrolyte. At least a portion of the electrolyte solution is located in the active material layer of the electrode plate, and the electrolyte solution located in the electrode plate is denoted as the intra-plate electrolyte solution.

At least a portion of the intra-plate electrolyte in the secondary battery provided in the present application comprises the intra-plate gelatinous electrolyte and the intra-plate electrolyte solution.

A gel skeleton in a condensed electrolyte may be formed through a polymerization reaction of a crosslinkable monomer. During the polymerization reaction, a corresponding initiator and/or a crosslinking agent may be added.

A gelation reaction of the crosslinkable monomer is generally a polymerization reaction, and the crosslinkable monomer here is a polymerizable monomer. Monomers involved in the formation of the gel skeleton through the polymerization reaction may be collectively referred to as polymerizable monomers. The polymerizable monomer at least includes, but is not limited to, the crosslinkable monomer. For example, the polymerizable monomer may further include a chain-extending monomer. The chain-extending monomer can provide a linear chain segment between crosslinking points of the gel skeleton. The chain-extending monomer may be pre-embedded in the active material layer of the electrode plate (the positive electrode plate, the negative electrode plate, or a combination thereof), or may be introduced in other ways, such as introduced with the injection of and impregnation with the electrolyte solution.

The initiator and/or the crosslinking agent may be introduced when the electrolyte solution is injected into the case. After sufficient impregnation, the electrolyte solution fills in the pores of the active material layer in the electrode plate, and may undergo an in-situ gelation reaction with the pre-embedded crosslinkable monomer therein. The polymerizable monomer forms the gel skeleton through the in-situ gelation reaction, and a portion of the electrolyte solution impregnated in the electrode plate pre-embedded with the crosslinkable monomer is converted to the intra-plate gelatinous electrolyte, and the unconverted portion serves as the intra-plate electrolyte solution, thereby obtaining the intra-plate gelatinous/liquid composite electrolyte comprising both the intra-plate gelatinous electrolyte and the intra-plate electrolyte solution. The amount of the pre-embedded crosslinkable monomer is controlled to regulate the mass ratio of the intra-plate gelatinous electrolyte to the intra-plate electrolyte solution. The type and amount of the initiator and/or the crosslinking agent may be appropriately selected based on the type and amount of the pre-embedded crosslinkable monomer. An electrode assembly assembled from the positive electrode plate, the negative electrode plate, and the separator may be installed in the case, and then the electrolyte solution is injected into the case. The description below may be referred to.

In the present application, the crosslinkable monomer comprises a functional group pair capable of undergoing a crosslinking reaction. Non-limiting examples of the functional group pair capable of undergoing the crosslinking reaction include, for example, a plurality of carbon-carbon double bonds, further for example, a monomer comprising at least 2 carbon-carbon double bonds; and for example, a crosslinking monomer combination, further for example, the crosslinking monomer combination comprising two monomers, one monomer comprising at least 2 reactive radicals F 1, the other monomer comprising at least 3 reactive radicals F2, the F1 and the F2 capable of being coupled to form a covalent bond. Non-limiting examples of the carbon-carbon double bond include, for example, CH₂=CH-CH₂- and CH₂=C(CH₃)-CH₂-. A hydrogen atom on the carbon-carbon double bond may be substituted with an appropriate substituent, as long as the crosslinking polymerization reaction is not affected. Non-limiting examples of the crosslinking monomer combination include, for example, a combination of a polyol or a polyamine with a polyisocyanate, which can undergo a coupling reaction between -OH or an amino (such as -NH₂ or >NH) and -NCO to form a polyurethane or polyurea, and further for example, a combination of a polyacid and a polyamine, which can undergo a coupling reaction between -COOH and -NH₂ or >NH to form a polymer comprising an amide bond (-CO-NH- or -CO-N<), etc..

The type of the polymerizable monomer may include, but is not limited to, one or more of a carbonate monomer, a sulfone monomer, an isocyanate monomer, an amide monomer, a nitrile monomer, a fluoride monomer, an ether compound monomer, an oligomer containing an ether chain segment, and a siloxane.

During the crosslinking reaction of the crosslinkable monomer, the system may comprise or may not comprise an initiator based on the requirements of the crosslinking reaction. When the initiator is added, the initiator may include, but is not limited to, one or more of an azo initiator (such as azobisisobutyronitrile (AIBN)), a peroxide initiator, an anionic/cationic initiator, an organic metal compound initiator, an amine catalyst initiator, and an organophosphorus initiator. The type and amount of the initiator may be appropriately selected and controlled based on the type and amount of the crosslinkable monomer. For example, mass ratio of the initiator relative to the crosslinkable monomer may be, but is not limited to, 1% to 5%.

In some embodiments, the crosslinkable monomer comprises at least two carbon-carbon double bonds.

In the present application, unless otherwise specified, the "carbon-carbon double bond" refers to a C=C structure capable of forming a -C-C- structure through an addition reaction.

In some embodiments, the crosslinkable monomer comprises at least two carbon-carbon double bonds, and can provide crosslinking points for the gel skeleton through a polymerization reaction.

In the present application, unless otherwise specified, the "carbon-carbon double bond" refers to a C=C structure capable of forming a -C-C- structure through an addition reaction.

Non-restrictively, the crosslinkable monomer may include one or more of ethylene glycol dimethacrylate, polyethylene glycol dimethacrylate, 1,4-butanediol dimethacrylate, 1,6-hexanediol dimethacrylate, 1,4-butanediol diacrylate, glycerol dimethacrylate, 1,2-propanediol dimethacrylate, 1,3-butanediol dimethacrylate, dipropylene glycol diacrylate, trimethylolpropane trimethacrylate, trimethylolpropane triacrylate, glycerol trimethacrylate, pentaerythritol tetramethacrylate, cyclohexanetriol trimethacrylate, divinylbenzene, ethylene glycol diallyl ether, polyethylene glycol diallyl ether, pentaerythritol triallyl ether, and may further include one or more of halogenated compounds of the above compounds. The number of substituting halogen atoms in the halogenated compound may be one or more. In an embodiment, all hydrogen atoms on the carbon-carbon double bond are substituted with halogen atoms, and an example of the halogen atoms is, e.g., a fluorine atom. The polyethylene glycol dimethacrylate may include, but is not limited to, one or more of diethylene glycol dimethacrylate, triethylene glycol dimethacrylate, and tetraethylene glycol dimethacrylate. The polyethylene glycol moiety in the polyethylene glycol diallyl ether may be, but not limited to, 2, 3, or 4 ethylene glycol units. The above carboxylate molecules may be, but are not limited to, a methyl ester, an ethyl ester, a propyl ester, or a butyl ester, etc., and as a non-limiting example, such as diethylene glycol dimethacrylate methyl ester and diethylene glycol dimethacrylate ethyl ester.

Non-restrictively, the chain-extending monomer may be an unsaturated monoolefin molecule, may include, but is not limited to, one or more of vinylidene fluoride, hexafluoropropylene, methyl methacrylate, methyl acrylate, ethyl methacrylate, ethyl acrylate, n-butyl methacrylate, butyl acrylate, n-octyl methacrylate, n-octyl acrylate, allyl methacrylate, styrene, α-methylstyrene, acrylonitrile, acrylic acid, methacrylic acid, butyl acrylate, hydroxyethyl acrylate, hydroxypropyl acrylate, hydroxyethyl methacrylate, hydroxypropyl methacrylate, etc., or may be a halogenated (such as fluorinated) compound of the above suitable compounds.

In the present application, the electrolyte in the secondary battery, except that at least a portion thereof is distributed in the electrode plate, may also be distributed outside the electrode plate, for example, at least a portion of region in a relative space between the positive electrode plate and the negative electrode plate. The electrolyte distributed outside the electrode plate may be referred to as an "extra-plate electrolyte", of which the composition is not particularly limited, and may be liquid, gel, or all-solid. In some embodiments, the extra-plate electrolyte at least includes a liquid electrolyte, and may further mainly include a liquid electrolyte (e.g., more than 80wt%), or may substantially be a liquid electrolyte (e.g., close to 100wt%).

In the present application, wt% represents mass percentage.

In some embodiments, the extra-plate electrolyte is in a liquid electrolyte.

In some embodiments, the electrolyte in the secondary battery of the present application is a non-aqueous electrolyte. The non-aqueous electrolyte comprises an electrolyte salt and a solvent.

In some embodiments, the intra-plate electrolyte and the extra-plate electrolyte each independently comprises an electrolyte salt and a solvent. The definition of the electrolyte salt can be found below. The definition of the solvent can also be found below. The type of the electrolyte salt in the intra-plate electrolyte may be identical to or different from the type of the electrolyte salt in the extra-plate electrolyte. The type of the solvent in the intra-plate electrolyte may be identical to or different from the type of the solvent in the extra-plate electrolyte. The electrolyte salt in the intra-plate gelatinous electrolyte may be identical to or different from the electrolyte salt in the intra-plate electrolyte solution. The solvent in the intra-plate gelatinous electrolyte may be identical to or different from the solvent in the intra-plate electrolyte solution.

In some embodiments, the composition of the intra-plate gelatinous electrolyte is identical to the composition of the intra-plate electrolyte solution.

In some embodiments, the solvent composition of the intra-plate gelatinous electrolyte is identical to the solvent composition of the intra-plate electrolyte solution.

In some embodiments, the electrolyte salt comprises an electrolyte lithium salt. In this case, the secondary battery may be a lithium-ion secondary battery.

Non-restrictively, the electrolyte lithium salt may include one or more of lithium hexafluorophosphate (LiPF₆), lithium tetrafluoroborate (LiBF₄), lithium perchlorate (LiClO₄), lithium hexafluoroarsenate (LiAsF₆), lithium bis(fluorosulfonyl)imide (LiFSI), lithium bis(trifluoromethanesulfonyl)imide (LiTFSI), lithium trifluoromethanesulfonate (LiTFS), lithium difluoro(oxalato)borate (LiDFOB), lithium bis(oxalate)borate (LiBOB), lithium difluorophosphate (LiPO₂F₂), lithium difluorobis(oxalato)phosphate (LiDFOP), and lithium tetrafluoro(oxalato)phosphate (LiTFOP).

In some embodiments, the electrolyte salt comprises an electrolyte sodium salt. In this case, the secondary battery may be a sodium-ion secondary battery.

Non-restrictively, the electrolyte sodium salt may include one or more of sodium hexafluorophosphate, sodium bis(fluorosulfonyl)imide, sodium bis(trifluoromethanesulfonyl)imide, sodium trifluoromethanesulfonate, sodium tetrafluoroborate, sodium difluorophosphate, sodium perchlorate, and sodium chloride.

In some embodiments, the solvent in the electrolyte is a non-aqueous solvent, may further be an organic solvent, and still further may include, but is not limited to, one or more of a carboxylate solvent, a carbonate solvent, and a sulfone solvent. The carboxylate solvent may be a carboxylate or a halogenated carboxylate thereof, and may further be a C₁₋₃ alkyl ester of a C₂₋₄ alkylcarboxylic acid or a halogenated compound thereof. The halogenated compound of the carboxylate is also a halogenated carboxylate. Examples of C₁₋₄ alkylcarboxylic acids include acetic acid, propanoic acid, and butyric acid. Examples of C₁₋₃ alkyl esters of carboxylic acids include a methyl ester, an ethyl ester, and a propyl ester. The carbonate solvent may be a carbonate or a halogenated compound thereof. The halogenated compound of the carbonate is also a halogenated carbonate. The halogen substituent in the halogenated carboxylate and the halogenated carbonate may be fluorine, and the number of halogen substituents may be 1 to fully halogenated. Taking fluorination as an example, the number of fluorine atoms in the fluorinated carboxylate and the fluorinated carbonate may be 1 to fully fluorinated.

Non-restrictively, the solvent in the electrolyte may include, but is not limited to, one or more of fluoroethylene carbonate, ethylene carbonate (or denoted as ethylene carbonate, 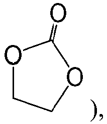 propylene carbonate (or denoted as propylene carbonate, 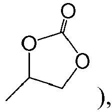 ethyl methyl carbonate, diethyl carbonate, dimethyl carbonate, dipropyl carbonate, methyl propyl carbonate, ethyl propyl carbonate, butylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, methyl ethyl sulfone, and diethyl sulfone. In some embodiments, the solvent in the electrolyte of the secondary battery includes fluoroethylene carbonate. In some embodiments, the solvent in the electrolyte of the secondary battery is fluoroethylene carbonate.

In some embodiments, the solvent in the electrolyte may be selected from one or more of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), dimethyl sulfone (MSM), methyl ethyl sulfone (EMS), and diethyl sulfone (ESE).

In some embodiments, the electrolyte further optionally comprises an additive. For example, the additive may include a negative electrode film-forming additive or a positive electrode film-forming additive, or may further include an additive that can improve some performances of the battery, such as an additive that improves overcharge performance of the battery or an additive that improves high-temperature or low-temperature performance of the battery.

In some embodiments, the intra-plate electrolyte and the extra-plate electrolyte may each independently comprise, or not comprise, an additive. The type of the additive in the intra-plate electrolyte may be identical to or different from the type of the solvent in the extra-plate electrolyte. The intra-plate gelatinous electrolyte and the intra-plate electrolyte solution may each independently comprise an additive. The additive in the intra-plate gelatinous electrolyte may be identical to or different from the additive in the intra-plate electrolyte solution. In some embodiments, the additive composition of the intra-plate gelatinous electrolyte is identical to the additive composition of the intra-plate electrolyte solution.

In some embodiments, the additive in the electrolyte of the secondary battery may include, but is not limited to, one or more of vinylene carbonate (VC, 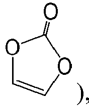 vinylethylene carbonate (VEC, 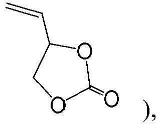 fluoroethylene carbonate (FEC), difluoroethylene carbonate (DFEC), trifluoropropylene carbonate (TFPC), methylene methanedisulfonate (MMDS), 1-propylene-1,3-sultone (PST), ethylene sulfite (ES), propylene sulfite (PS), ethylene sulfate (DTD), succinonitrile (SN), adiponitrile (AND), sulfonate cyclic quaternary ammonium salt, tris(trimethylsilyl) phosphate (TMSP), tris(trimethylsilyl) borate (TMSB), and anisole.

### Negative electrode plate

The negative electrode plate in the secondary battery provided in the present application comprises a negative electrode active material layer, and the negative electrode active material layer comprises a negative electrode active material.

The negative electrode active material may include a well-known negative electrode active material for a battery in the art. As a non-limiting example, other negative electrode active materials may include one or more of the following materials: artificial graphite, natural graphite, soft carbon, hard carbon, silicon-based material, tin-based material, lithium titanate, and the like. The silicon-based material may include one or more of elemental silicon, a silicon-oxygen compound, a silicon-carbon composite, a silicon-nitrogen composite, or a silicon alloy. The tin-based material may include one or more of elementary tin, a tin oxide, and a tin alloy. However, the present application is not limited to these materials, and other conventional materials that may be used as negative active materials for batteries may also be used. These negative electrode active materials may only be used alone, or more than two thereof may be used in combination.

As mentioned above, in some embodiments, the negative electrode active material comprises a silicon-based material. Further, the silicon-based material may include one or more of elemental silicon, a silicon-oxygen compound, a silicon-carbon composite, a silicon-nitrogen composite, or a silicon alloy.

In some embodiments, the negative electrode plate comprises a negative electrode current collector and a negative electrode film layer arranged on at least one surface of the negative electrode current collector, the negative electrode film layer comprises a negative electrode active material layer, and the negative electrode active material layer comprises a negative electrode active material. The negative electrode active material may be as defined above.

As a non-limiting example, the negative electrode current collector has two surfaces opposite in its own thickness direction, and the negative electrode film layer is arranged on any one or both of the two opposite surfaces of the negative electrode current collector.

In some embodiments, a metal foil or a composite current collector may be used as the negative electrode current collector. For example, a copper foil may be used as the metal foil. The composite current collector may comprise a high molecular material substrate layer and a metal layer formed on at least one surface of a high molecular material substrate. The composite current collector may be obtained by forming a metal material on the high molecular material substrate. In the negative electrode current collector, non-limiting examples of the metal material may include one or more of copper, a copper alloy, nickel, a nickel alloy, titanium, a titanium alloy, silver, and a silver alloy, etc. In the negative electrode current collector, non-limiting examples of the high molecular material substrate may include one or more of substrates, such as polypropylene (PP), polyethylene terephthalate (PET), polybutylene terephthalate (PBT), polystyrene (PS), polyethylene (PE), etc.

In some embodiments, the negative electrode active material layer further optionally comprises a binder. The binder may include one or more of styrene butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS). An example of a PAA binder is, for example, polyacrylic acid (PAA).

In some embodiments, the binder in the negative electrode film layer or the negative electrode active material layer includes one or more of PAA and SBR.

In some embodiments, the negative electrode film layer further optionally comprises a conductive agent. The conductive agent may include one or more of superconducting carbon, acetylene black, carbon black, Ketjen black, carbon dot, carbon nanotube, graphene, and carbon nanofiber.

In some embodiments, the negative electrode active material layer further optionally comprises other adjuvants, such as a thickener. Non-limiting examples of the thickener may include, e.g., sodium carboxymethyl cellulose (CMC-Na).

In some embodiments, the negative electrode plate may be prepared by: dispersing the above ingredients, such as the negative electrode active material, the conductive agent, the binder, and any other ingredient, for preparing the negative electrode plate in a solvent (a non-limiting example of the solvent is, for example, deionized water) to form a negative electrode slurry; and coating the negative electrode slurry on at least one side surface of the negative electrode current collector, followed by processes, such as drying and compaction (the compaction may be implemented by cold pressing), to provide the negative electrode plate. The negative electrode slurry may be coated on a single surface of the negative electrode current collector or on both surfaces of the negative electrode current collector. Solid content of the negative electrode slurry may be 30wt% to 70wt%. Viscosity of the negative electrode slurry at room temperature may be 2,000 mPa·s to 10,000 mPa·s. When the negative electrode slurry is coated, unit surface density of the coating may be 35 g/m² to 150 g/m² based on dry weight. Compacted density of the negative electrode plate may be 1.0 g/m³ to 2.0 g/m³.

The slurry for preparing the negative electrode plate may comprise, or may not comprise, the above crosslinkable monomer. When arrangement of the above gelatinous/liquid composite electrolyte in the negative electrode plate is required, a crosslinkable monomer for forming a gel skeleton of the intra-plate gelatinous electrolyte may be added to the negative electrode slurry. After the processes such as coating, drying and cold pressing, the crosslinkable monomer is pre-embedded in the negative electrode plate. An electrolyte solution comprising an initiator and/or a crosslinking agent may be introduced during subsequent injection of the electrolyte solution, the gel skeleton is formed through an in-situ gelation reaction, a portion of the electrolyte solution impregnated in the electrode plate pre-embedded with the crosslinkable monomer is converted to the intra-plate gelatinous electrolyte, and the unconverted portion serves as the intra-plate electrolyte solution, thereby obtaining the intra-plate gelatinous/liquid composite electrolyte comprising both the intra-plate gelatinous electrolyte and the intra-plate electrolyte solution. The amount of the pre-embedded crosslinkable monomer is controlled to regulate the mass ratio of the intra-plate gelatinous electrolyte to the intra-plate electrolyte solution. When the gel skeleton of the gel electrolyte of the negative electrode plate involves a chain-extending monomer, the chain-extending monomer may be introduced with the negative electrode slurry, or may be injected during subsequent injection of the electrolyte solution.

### Positive electrode plate

In the present application, the positive electrode plate comprises a positive electrode current collector and a positive electrode film layer arranged on at least one surface of the positive electrode current collector, the positive electrode film layer comprises a positive electrode active material layer, and further, the positive electrode active material layer comprises a positive electrode active material.

As a non-limiting example, the positive electrode current collector has two surfaces opposite in its own thickness direction, and the positive electrode film layer is arranged on any one or both of the two opposite surfaces of the positive electrode current collector.

In some embodiments, a metal foil or a composite current collector may be used as the positive electrode current collector. For example, an aluminum foil may be used as the metal foil. The composite current collector may comprise a high molecular material substrate layer and a metal layer formed on at least one surface of the high molecular material substrate layer. The composite current collector may be formed by forming a metal material on a high molecular material substrate; the metal material may include one or more of aluminum, an aluminum alloy, nickel, a nickel alloy, titanium, a titanium alloy, silver, and a silver alloy; and non-limiting examples of the high molecular material substrate include a substrate of polypropylene (PP), polyethylene terephthalate (PET), polybutylene terephthalate (PBT), polystyrene (PS), polyethylene (PE), or the like.

In some embodiments of the present application, the positive electrode active material includes a lithium-ion material; and further, the secondary battery is a lithium-ion secondary battery.

In some embodiments of the present application, the secondary battery is the lithium-ion secondary battery. A charge-discharge process of the lithium-ion secondary battery is implemented using the intercalation and deintercalation of lithium ions in the electrodes and the transport of lithium ions in an electrolyte. Generally, active ions in the lithium-ion secondary battery are, but are not limited to, the lithium ions.

A positive electrode active material for a battery well known in the art may be used as the positive electrode active material. As a non-limiting example, the positive electrode active material or the lithium-ion material may include one or more of the following materials or substances: a lithium-containing phosphate of olivine structure, a lithium-transition metal oxide, and a respective modified compound thereof. However, the present application is not limited to these materials or substances, and other conventional materials or substances that may be used as positive electrode may be used alone, or more than two thereof may be used in combination. Non-limiting examples of the lithium-transition metal oxide may include, but are not limited to, one or more of a lithium-cobalt oxide, a lithium-nickel oxide, a lithium-manganese oxide, a lithium-nickel-cobalt oxide, a lithium-manganese-cobalt oxide, a lithium-nickel-manganese oxide, a lithium-nickel-cobalt-manganese oxide, a lithium-nickel-cobalt-aluminum oxide, and a modified compound thereof. Non-limiting examples of the lithium-cobalt oxide include LiCoO₂; non-limiting examples of the lithium-nickel oxide include LiNiO₂; non-limiting examples of the lithium-manganese oxide include, e.g., LiMnO₂ or LiMn₂O₄; and non-limiting examples of the lithium-nickel-cobalt-manganese oxide include, e.g., LiNi_{1/3}Co_{1/3}Mn_{1/3}O₂ (or abbreviated as NCM₃₃₃), LiNi_{0.5}Co_{0.2}Mn_{0.3}O₂ (or abbreviated as NCM₅₂₃), LiNi_{0.5}Co_{0.25}Mn_{0.25}O₂ (or abbreviated as NCM₂₁₁), LiNi_{0.6}Co_{0.2}Mn_{0.2}O₂ (or abbreviated as NCM₆₂₂), or LiNi_{0.8}Co_{0.1}Mn_{0.1}O₂ (or abbreviated as NCM₈₁₁). Non-limiting examples of the lithium-nickel-cobalt-aluminum oxide include LiNi_{0.85}Co_{0.15}Al_{0.05}O₂. Non-limiting examples of the lithium-containing phosphate of olivine structure may include, but are not limited to, one or more of a lithium iron phosphate, a lithium iron phosphate-carbon composite material, a lithium manganese phosphate, a lithium manganese phosphate-carbon composite material, a lithium iron manganese phosphate, and a lithium iron manganese phosphate-carbon composite material. Non-limiting examples of the lithium iron phosphate include LiFePO₄ (or abbreviated as LFP); and non-limiting examples of the lithium manganese phosphate include LiMnPO₄.

In some embodiments, the positive electrode active material or the lithium-ion material may include, but is not limited to, one or more of the following materials: a lithium-cobalt oxide, a lithium-nickel oxide, a lithium-manganese oxide, a lithium-nickel-manganese oxide, a lithium-nickel-cobalt-manganese oxide, a lithium-nickel-cobalt-aluminum oxide, a sodium oxide, and a potassium oxide, and a material composed of any one of the above substances and a doping element; and further, the doping element in any one of the positive electrode active materials independently includes one or more of a transition metal element and a non-transition metal element.

In some embodiments of the present application, the positive electrode active material includes a sodium-ion material; and further, the secondary battery is a sodium-ion secondary battery.

In some embodiments, the sodium-ion material includes one or more of a sodium-transition metal oxide, a polyanionic compound, and a prussian blue compound. An appropriate positive electrode active material may be flexibly selected, so that the sodium-ion battery has more selectivity and wider applications.

In some embodiments, the positive electrode active material may include, but is not limited to, one or more of a sodium-transition metal oxide, a polyanionic compound, and a prussian blue compound. However, the present application is not limited to the materials or substances listed above, and other known materials or substances that may be used as positive electrode active materials of sodium-ion batteries may also be used.

In some embodiments, the transition metal in the sodium-transition metal oxide may be one or more of Mn, Fe, Ni, Co, Cr, Cu, Ti, Zn, V, Zr, and Ce. Non-limiting examples of the sodium-transition metal oxide may be NaₓZO₂, wherein Z may be one or more of Ti, V, Mn, Co, Ni, Fe, Cr, and Cu, 0<x≤1.

In some embodiments, the sodium-transition metal oxide may be Na₁₋ₓCuₕFeₖMn₁M¹ₘO_{2-y}, wherein M¹ may be one or more of Li, Be, B, Mg, Al, K, Ca, Ti, Co, Ni, Zn, Ga, Sr, Y, Nb, Mo, In, Sn, and Ba, 0<x≤0.33, 0<h≤0.24, 0≤k≤0.32, 0<1≤0.68, 0≤m<0.1, h+k+1+m=1, and 0≤y<0.2.

In some embodiments, the sodium-transition metal oxide may be Na_{0.67}Mn_{0.7}Ni_{q}M²_{0.3-z}O₂, wherein M² may be one or more of Li, Mg, Al, Ca, Ti, Fe, Cu, Zn, and Ba, 0<q≤0.1.

In some embodiments, the sodium-transition metal oxide may be NaₐLi_{b}Ni_{c}Mn_{d}FeₑO₂, wherein 0.67<a≤1, 0<b<0.2, 0<c<0.3, 0.67<d+e<0.8, and b+c+d+e=1.

In some embodiments, the polyanionic compound may be a class of compounds having sodium ions, transition metal ions, and a tetrahedral (YO₄)ⁿ⁻ anionic unit. The transition metal here may be one or more of Mn, Fe, Ni, Co, Cr, Cu, Ti, Zn, V, Zr, and Ce; Y may be one or more of P, S, and Si; and n represents a valence state of (YO₄)ⁿ⁻.

In some embodiments, the polyanionic compound may further be a class of compounds having sodium ions, transition metal ions, a tetrahedral (YO₄)ⁿ⁻ anionic unit, and a halogen anion. The transition metal here may be one or more of Mn, Fe, Ni, Co, Cr, Cu, Ti, Zn, V, Zr, and Ce; Y may be one or more of P, S, and Si, n represents a valence state of (YO₄)ⁿ⁻; and the halogen may be one or more of F, Cl, and Br.

In some embodiments, the polyanionic compound may further be a class of compounds having sodium ions, a tetrahedral (YO₄)ⁿ⁻ anionic unit, a polyhedral unit (ZO_{y})^{m+}, and optionally a halogen anion. Y may be one or more of P, S, and Si, n represents a valence state of (YO₄)ⁿ⁻; Z represents a transition metal, and may be one or more of Mn, Fe, Ni, Co, Cr, Cu, Ti, Zn, V, Zr, and Ce, m represents a valence state of (ZO_{y})^{m+}; and the halogen may be one or more of F, Cl, and Br.

In some embodiments, the polyanionic compound may be one or more of NaFePO₄, Na₃V₂(PO₄)₃, NaM'PO₄F, and Na₃(VO_{y})₂(PO₄)₂F³⁻2_{y}(0≤y≤1); wherein M' in the NaM'PO₄F may be one or more of V, Fe, Mn, and Ni.

In some embodiments, the prussian blue compound may be a class of compounds having sodium ions, transition metal ions, and cyanide ions (CN⁻). The transition metal here may be one or more of Mn, Fe, Ni, Co, Cr, Cu, Ti, Zn, V, Zr, and Ce. Non-limiting examples of the prussian blue compound may be NaₐMe_{b}Me'_{c}(CN)₆, wherein Me and Me' may each independently be one or more of Ni, Cu, Fe, Mn, Co, and Zn, 0<a≤2, 0<b<1, and 0<c<1.

In some embodiments, the positive electrode active material layer further optionally comprises a binder. As a non-limiting example, the binder may comprise one or more of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluoroacrylate resin.

In some embodiments, the positive electrode active material layer further optionally comprises a conductive agent. As a non-limiting example, the conductive agent may include one or more of superconducting carbon, acetylene black, carbon black, Ketjen black, carbon dot, carbon nanotube, graphene, and carbon nanofiber.

In some embodiments, the positive electrode plate may be prepared by: dispersing the above ingredients, such as the positive electrode active material, the conductive agent, the binder, and any other ingredient, for preparing the positive electrode plate in a solvent to form a positive electrode slurry; and coating the positive electrode slurry on at least one side surface of the positive electrode current collector, followed by processes, such as drying and compaction (the compaction may be implemented by cold pressing), to provide the positive electrode plate. The type of the solvent may be selected from, but is not limited to, any one in the above embodiments, such as N-methylpyrrolidone (NMP). The positive electrode slurry may be coated on a single surface of the positive electrode current collector or on both surfaces of the positive electrode current collector. Solid content of the positive electrode slurry may be 40wt% to 80wt%. Viscosity of the positive electrode slurry at room temperature may be 5,000 mPa·s to 25,000 mPa·s. When the positive electrode slurry is coated, unit surface density of the coating may be 130 g/m² to 400 g/m² based on dry weight. Compacted density of the positive electrode plate may be 3.0 to 3.6 g/m³, optionally 3.3 to 3.5 g/m³.

The slurry for preparing the positive electrode plate may comprise, or may not comprise, the above crosslinkable monomer. When arrangement of the above gelatinous/liquid composite electrolyte in the positive electrode plate is required, a crosslinkable monomer for forming a gel skeleton of the intra-plate gelatinous electrolyte may be added to the positive electrode slurry. After the processes such as coating, drying and cold pressing, the crosslinkable monomer is pre-embedded in the positive electrode plate. An electrolyte solution comprising an initiator and/or a crosslinking agent may be introduced during subsequent injection of the electrolyte solution, the gel skeleton is formed through an in-situ gelation reaction, a portion of the electrolyte solution impregnated in the electrode plate pre-embedded with the crosslinkable monomer is converted to the intra-plate gelatinous electrolyte, and the unconverted portion serves as the intra-plate electrolyte solution, thereby obtaining the intra-plate gelatinous/liquid composite electrolyte comprising both the intra-plate gelatinous electrolyte and the intra-plate electrolyte solution. The amount of the pre-embedded crosslinkable monomer is controlled to regulate the mass ratio of the intra-plate gelatinous electrolyte to the intra-plate electrolyte solution. When the gel skeleton of the gel electrolyte of the positive electrode plate involves a chain-extending monomer, the chain-extending monomer may be introduced with the positive electrode slurry, or may be injected during subsequent injection of the electrolyte solution.

### Separator

In some embodiments, the secondary battery further comprises a separator. The type of the separator is not particularly limited in the present application, and any well-known porous-structured separator having good chemical stability and mechanical stability may be selected.

In some embodiments, the material of the separator may be one or more of glass fiber, nonwoven cloth, polyethylene, polypropylene, and polyvinylidene fluoride. The separator may be a monolayer film, or may be a multi-layer composite film, which is not particularly limited. When the separator is a multi-layer composite film, the material in each layer may be identical or different, which is not particularly limited.

### Electrode assembly, electrochemical energy storage apparatus, and secondary battery

In some embodiments, the positive electrode plate, the negative electrode plate, and the separator may be made into an electrode assembly by a winding process or a stacking process.

In some embodiments, the electrochemical energy storage apparatus may comprise an outer package. The outer package may be used to encapsulate the electrode assembly and the electrolyte described above.

In some embodiments, the secondary battery may comprise an outer package. The outer package may be used to encapsulate the electrode assembly and the electrolyte described above.

In some embodiments, the outer package of the secondary battery may be a hard case, such as a hard plastic case, an aluminum case, a steel case, and the like. The outer package of the secondary battery may also be a pouch, such as a bag-type pouch. The material of the pouch may be plastic, and further, non-limiting examples of the plastic may include one or more of polypropylene, polybutylene terephthalate, and polybutylene succinate.

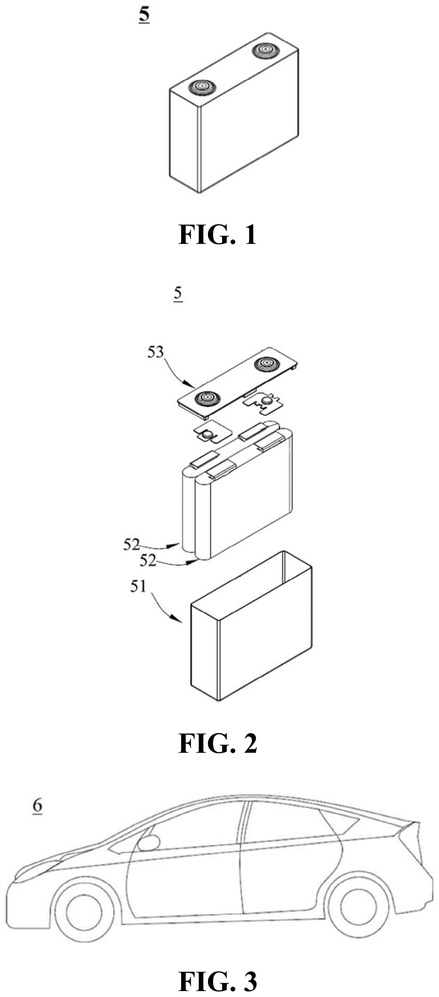

The shape of the secondary battery is not particularly limited in the present application, and may be a cylinder shape, a square shape, or any other shape. For example, FIG. 1 shows a secondary battery 5 with a square structure as an example.

In some embodiments, referring to FIG. 2, the outer package may comprise a case 51 and a cover plate 53. The case 51 may comprise a bottom plate and a side plate connected to the bottom plate, which enclose to form an accommodating cavity. The case 51 has an opening that communicates with the accommodating cavity, and the cover plate 53 may cover the opening to close the accommodating cavity. The positive electrode plate, the negative electrode plate, and the separator may form an electrode assembly 52 by a winding process or a stacking process. The electrode assembly 52 is encapsulated within the accommodating cavity. A liquid electrolyte is injected into the accommodating cavity in which the electrode assembly 52 is encapsulated, so that a crosslinkable monomer pre-embedded in the electrode plates undergoes a gelation reaction, and so that a portion of the liquid electrolyte in the electrode plates is converted to a gelatinous electrolyte, thereby obtaining the above intra-plate gelatinous/liquid composite electrolyte. The number of electrode assemblies 52 comprised in the secondary battery 5 may be one or more, and may be selected by those skilled in the art based on actual requirements. When the gel skeleton of the gel electrolyte in the electrode plates involves a chain-extending monomer, the chain-extending monomer may be introduced with a corresponding slurry, or may be injected during subsequent injection of the electrolyte solution.

In some embodiments, the secondary battery provided in the first aspect of the present application may be prepared using a method comprising the following steps:
assembling a positive electrode plate, a negative electrode plate, and a separator into an electrode assembly, wherein the separator is arranged between the positive electrode plate and the negative electrode plate; wherein the active material layer of at least one of the positive electrode plate and the negative electrode plate comprises a polymerizable monomer, the polymerizable monomer at least comprises a crosslinkable monomer; and the polymerizable monomer may comprise, or may not comprise, a chain-extending monomer;
installing the electrode assembly into a case;
injecting an electrolyte base fluid into the case installed with the electrode assembly, fully impregnating the positive electrode plate and the negative electrode plate for an in-situ gelation reaction, forming a gel skeleton from the polymerizable monomer in a corresponding active material layer, forming an intra-plate gelatinous electrolyte comprising the gel skeleton from a part of the electrolyte base fluid in the active material layer, and using the rest part of the electrolyte base fluid in the active material layer as an intra-plate electrolyte solution, so as to form a gelatinous/liquid composite electrolyte in the active material layer; wherein the electrolyte base fluid comprises an electrolyte salt, a solvent, and an initiator for initiating a polymerization reaction of the polymerizable monomer, and may further comprise, or not comprise, an additive; and
obtaining the secondary battery in the first aspect of the present application by formation after the gelation reaction is complete; wherein the secondary battery comprises at least two electrode plates, any one of the electrode plates comprises an active material layer arranged on at least one side of the electrode plate; an active material layer on at least one side of at least one of the electrode plates comprises active particles and an intra-plate electrolyte located in pores among the active particles; the intra-plate electrolyte comprises the intra-plate gelatinous electrolyte and the intra-plate electrolyte solution; the intra-plate gelatinous electrolyte and the intra-plate electrolyte solution each independently comprise an electrolyte salt, and a ratio R_{W} of mass of the electrolyte salt in the intra-plate gelatinous electrolyte to mass of the electrolyte salt in the intra-plate electrolyte solution satisfies 1<R_{W}<9.

The description in the context of the present application may be referred to for the terms or phrases, such as the positive electrode plate, the negative electrode plate, the separator, the electrode assembly, the polymerizable monomer, the crosslinkable monomer, and the chain-extending monomer, involved in the above preparation method, for example, the method for preparing a positive electrode plate pre-embedded with a polymerizable monomer, the method for preparing a negative electrode plate pre-embedded with a polymerizable monomer, and the like.

The gelation reaction may also be referred to as a crosslinking curing reaction, which may be carried out under heating conditions at a heating temperature, which may be 50 to 80°C, such as 50°C, 60°C, 70°C, or 80°C.

In a second aspect, the present application provides an electrical apparatus, comprising the secondary battery in the first aspect of the present application.

The secondary battery may be used as a power source of the electrical apparatus, or may be used as an energy storage unit of the electrical apparatus. The electrical apparatus may include, but is not limited to, a mobile device, an electric vehicle, an electric train, a ship, a satellite, an energy storage system, etc. The mobile device may be, for example, a mobile phone or a laptop; and the electric vehicle may be, for example, but is not limited to, an all-electric vehicle, a hybrid electric vehicle, a plug-in hybrid electric vehicle, an electric bicycle, an electric scooter, an electric golf cart, an electric truck, etc.

For the electrical apparatus, the secondary battery may be selected based on use requirements thereof.

FIG. 3 shows an electrical apparatus 6 as an example. The electrical apparatus is, e.g., an all-electric vehicle, a hybrid electric vehicle, or a plug-in hybrid electric vehicle. In order to meet the requirements of the electrical apparatus for high power and high energy density of a secondary battery, a battery pack or a battery module may be used.

As another example, the apparatus may be a mobile phone, a tablet, a laptop, etc. The apparatus is generally required to be light and thin, and may use a secondary battery as a power source.

Some embodiments of the present application are described below. The embodiments described below are illustrative, are merely used to explain the present application, and should not be construed as limiting the present application. The embodiments in which techniques or conditions are not specified are implemented based on the description above, or based on techniques or conditions described in literatures of the art, or based on the product manuals. Where no manufacturers are specified, the employed reagents or instruments are all commercially available conventional products, or may be conventionally synthesized from commercially available products.

In the following embodiments, unless otherwise specified, the "room temperature" refers to 20°C to 30°C, and further may be 25°C.

The "compacted density" used in the present application has a well-known meaning in the art and is one of the reference indicators of energy density of a material. In the present application, unless otherwise specified, the compacted density of an electrode plate refers to a ratio of mass of an active material layer to its volume. The compacted density of the positive electrode plate refers to a ratio of mass of the positive electrode active material layer to its volume, and the compacted density of the negative electrode plate refers to a ratio of mass of the negative electrode active material layer to its volume. The compacted density can be obtained by conventional testing in the art.

In the following embodiments, AIBN is azobisisobutyronitrile, which is used as an initiator to initiate a polymerization reaction of a polymerizable monomer for gelation. Diethylene glycol dimethacrylate is diethylene glycol dimethacrylate ethyl ester.

### Example 1. Intra-plate gelatinous/liquid composite electrolyte arranged in a negative electrode plate

### (1) Negative electrode plate pre-embedded with a polymerizable monomer

A negative electrode active material (a mixture of artificial graphite and silicon oxide SiOₓ, mass proportion of silicon oxide: 20%), a conductive agent acetylene black, a binder styrene butadiene rubber (SBR), a thickener sodium carboxymethyl cellulose (CMC-Na), and a polymerizable monomer (diethylene glycol dimethacrylate) at a mass ratio of 93.8%:2%:1%:2%:1.2% were added to deionized water, and fully mixed to form a negative electrode slurry with a solid content of about 48%. The resulting negative electrode slurry was uniformly coated on double side surfaces of a negative electrode current collector copper foil, dried at 80°C, and then cold pressed under an appropriate cold pressing pressure controlled based on a preset porosity to provide the negative electrode plate pre-embedded with the polymerizable monomer. Compacted density of the negative electrode plate is 1.7 g/m³.

In this example, mass proportion of the polymerizable monomer in non-solvent ingredients of the negative electrode slurry is 1.2%.

### (2) Positive electrode plate

A positive electrode active material LiNi_{0.8}Co_{0.1}Mn_{0.1}O₂ (i.e., NCM811), a conductive agent acetylene black, and polyvinylidene fluoride (PVDF) at a mass ratio of 97%:1%:2% were fully mixed in a solvent N-methylpyrrolidone (NMP) to provide a positive electrode slurry with a solid content of about 65%. The positive electrode slurry was coated on double side surfaces of an aluminum foil, dried at 100°C, and cold pressed, to provide the positive electrode plate. Compacted density of the positive electrode plate is 3.5 g/cm³, and porosity of the positive electrode plate is about 15%.

### (3) Separator

A PE separator was used as the separator.

### (4) Liquid electrolyte

Ethylene carbonate (EC), ethyl methyl carbonate (EMC), and diethyl carbonate (DEC) at a volume ratio of 1:1:1 were fully mixed, and fully dissolved in lithium hexafluorophosphate (LiPF6), to which azobisisobutyronitrile (initiator) was added to provide a liquid electrolyte with a concentration of LiPF6 of 1 mol/L and a mass proportion of the initiator relative to the pre-embedded polymerizable monomer of 3%.

### (5) Assembly and preparation of a secondary battery

The above separator was sequentially stacked between the positive electrode plate and the negative electrode plate, so that the separator was located between the positive electrode plate and the negative electrode plate to serve for separation, and was winded conventionally to provide an electrode assembly, which was placed in a battery case;
after drying, the above liquid electrolyte was injected into the case at a liquid injection coefficient of 1.6 g/Ah for full impregnation, and the system was left to stand at 70°C for 12 h to fully crosslink and cure the polymerizable monomer pre-embedded in the electrode plates, thus forming a gelatinous electrolyte in pores of the corresponding electrode plate; and
after cooling, the secondary battery with a gelatinous/liquid composite electrolyte in the negative electrode plate was obtained through processes such as formation and standing.

The liquid injection coefficient has the conventional meaning in the art, and its calculation formula is: liquid injection volume divided by a preset capacity, g/Ah.

**Examples 2-9** A method substantially same as that in Example 1 was used, except that: the amount of the polymerizable monomer added to the negative electrode slurry was changed, as shown in Table 1, and the pressure during the cold pressing of the negative electrode plate was required to be appropriately adjusted according to Table 1 to obtain a target porosity, and the porosity value was allowed to fluctuate within ±2%.

**Example 10** A method substantially same as that in Example 1 was used, except that: the negative electrode active material layer was a double-layer structure, the negative electrode slurry in step (1) was coated twice, the negative electrode slurry during first coating did not comprise the polymerizable monomer (the formed lower active layer was not pre-embedded with the polymerizable monomer), the polymerizable monomer was only pre-embedded in the upper active layer (i.e., the outside active layer of the negative electrode) during second coating, and the total mass of the polymerizable monomer during the second coating remained unchanged. The thickness and porosity of the upper active layer are substantially identical to those of the lower active layer.

**Example 11** A method substantially same as that in Example 1 was used, except that: the negative electrode active material layer was a double-layer structure, the negative electrode slurry in step (1) was coated twice, the polymerizable monomer was only pre-embedded in the upper active layer (i.e., the outside active layer of the negative electrode) during first coating, the negative electrode slurry during second coating did not comprise the polymerizable monomer (the formed lower active layer was not pre-embedded with the polymerizable monomer), and the concentration of the polymerizable monomer during the first coating remained unchanged. The thickness and porosity of the upper active layer are substantially identical to those of the lower active layer.

### Example 13. Intra-plate gelatinous/liquid composite electrolyte arranged in a positive electrode plate

A method substantially same as that in Example 1 was used, except that the polymerizable monomer was pre-embedded in the positive electrode slurry, while the polymerizable monomer was not pre-embedded in the negative electrode slurry.

### (1) Negative electrode plate

A negative electrode active material (a mixture of artificial graphite and silicon oxide SiOₓ, mass proportion of silicon oxide: 20%), a conductive agent acetylene black, a binder styrene butadiene rubber (SBR), and a thickener sodium carboxymethyl cellulose (CMC-Na) at a mass ratio of 94:2:1:2 were added to deionized water, and fully mixed to form a negative electrode slurry with a solid content of about 46%. The resulting negative electrode slurry was uniformly coated on double side surfaces of a negative electrode current collector copper foil, dried at 80°C, and then cold pressed to provide the negative electrode plate. Compacted density of the negative electrode plate is about 1.7 g/m³. Porosity of the negative electrode plate is about 40%.

### (2) Positive electrode plate pre-embedded with a polymerizable monomer

A positive electrode active material LiNi_{0.8}Co_{0.1}Mn_{0.1}O₂ (i.e., NCM811), a conductive agent acetylene black, polyvinylidene fluoride (PVDF), and a polymerizable monomer (a mixture of vinylidene fluoride, hexafluoropropylene, and ethylene glycol diallyl ether at a mass ratio of 1:1:1) at a mass ratio of 95.7%:1%:2%:1.3% were fully mixed in a solvent N-methylpyrrolidone (NMP) to provide a positive electrode slurry with a solid content of about 65%. The positive electrode slurry was coated on double side surfaces of an aluminum foil, dried at 100°C and then cold pressed under an appropriate cold pressing pressure controlled based on a preset porosity, to provide the positive electrode plate pre-embedded with the polymerizable monomer. Compacted density of the positive electrode plate is 3.5 g/m³.

In this example, mass proportion of the polymerizable monomer in non-solvent ingredients of the positive electrode slurry is 1.3%.

### (3) Separator

A separator same as that in Example 1 was used.

### (4) Liquid electrolyte

A liquid electrolyte same as that in Example 1 was used.

### (5) Assembly and preparation of a secondary battery

The secondary battery having a gelatinous/liquid composite electrolyte in the positive electrode plate was prepared through the processes same as those in Example 1.

**Examples 13-17** A method substantially same as that in Example 12 was used, except that: the amount of the polymerizable monomer added to the positive electrode slurry was changed, as shown in Table 1, and the pressure during the cold pressing of the positive electrode plate was required to be appropriately adjusted according to Table 1 to obtain a target porosity, and the porosity value was allowed to fluctuate within ±2%.

### Example 18. Intra-plate gelatinous/liquid composite electrolyte arranged in each of the positive electrode plate and the positive electrode plate

### (1) Negative electrode plate

A method same as that in Example 3 was used to obtain the negative electrode plate pre-embedded with the polymerizable monomer.

### (2) Positive electrode plate

A method same as that in Example 14 was used to obtain the positive electrode plate pre-embedded with the polymerizable monomer.

### (3) Separator

A separator same as that in Example 3 was used.

### (4) Liquid electrolyte

A liquid electrolyte same as that in Example 3 was used.

### (5) Assembly and preparation of a secondary battery

The secondary battery having a gelatinous/liquid composite electrolyte in each of the positive electrode plate and the negative electrode plate was prepared through the processes same as those in Example 3.

**Comparative Example 1.** The gelatinous/liquid composite electrolyte was not arranged in each of the positive electrode plate and the negative electrode plate.

A preparation method substantially same as that in Example 1 was used, except that: no polymerizable monomer was added to the negative electrode slurry, and the remaining operation steps and parameters were same as those in Example 1.

In addition, the difference between this example and Example 13 was that no polymerizable monomer was added to the positive electrode slurry.

Table 1 may be referred to.

### Comparative Example 2. Too high proportion of gelatinous electrolyte in pores of the negative electrode plate

A preparation method substantially same as that in Example 1 was used, except that: content of the polymerizable monomer in the negative electrode slurry was increased, as shown in Table 1, and the remaining operation steps and parameters were same as those in Example 1.

### Comparative Example 3. Too high proportion of gelatinous electrolyte in pores of the positive electrode plate

A preparation method substantially same as that in Example 13 was used, except that: content of the polymerizable monomer in the positive electrode slurry was increased, as shown in Table 1, and the remaining operation steps and parameters were same as those in Example 1.

### Comparative Example 4. Introduction of polymerizable monomer with liquid electrolyte

The negative electrode plate was prepared using the method in Example 3, the positive electrode plate was prepared using the method in Example 14, and the separator was prepared using the method in Example 3.

Composition of the liquid electrolyte was as follows: ethylene carbonate (EC), ethyl methyl carbonate (EMC), and diethyl carbonate (DEC) at a volume ratio of 1:1:1 were fully mixed, and fully dissolved in lithium hexafluorophosphate (LiPF6), to which a polymerizable monomer (diethylene glycol dimethacrylate) and an initiator (AIBN) were added, and the mixture was fully mixed to provide a liquid electrolyte comprising the polymerizable monomer, wherein the concentration of LiPF6 was 1 mol/L, and the concentration of the polymerizable monomer was converted based on a liquid injection coefficient, so that the total amount of the polymerizable monomer in the secondary battery thus prepared was substantially consistent with the amount of the polymerizable monomer pre-embedded in the negative electrode plate of the secondary battery in Example 1.

The above separator was sequentially stacked between the positive electrode plate and the negative electrode plate, so that the separator was located between the positive electrode plate and the negative electrode plate to serve for separation, and was winded conventionally to provide an electrode assembly, which was placed in a battery case;
after drying, the above liquid electrolyte comprising the polymerizable monomer was injected into the case at a liquid injection coefficient same as that in Example 1, and after the liquid injection, the liquid electrolyte was crosslinked and cured as soon as possible under crosslinking and curing conditions same as those in Example 1, so that the gelatinous electrolyte was substantially distributed outside the electrode plates; and
after cooling, the secondary battery with a gelatinous/liquid composite electrolyte outside the electrode plates was obtained through processes such as formation and standing.

### Test method of material structure and composition

As tested and analyzed through focused electron beam (FIB) technology and scanning electron microscope (SEM), in combination with focused electron beam (FIB) serial sectioning, energy dispersive spectroscopy (EDS)-element energy spectrum, and three-dimensional reconstruction analysis software, the following data was obtained: including the pore size of the active material layer, the porosity b of the active material layer (the porosity b1 of the negative electrode active material layer, the porosity b2 of the positive electrode active material layer), the layer thickness of the active material layer, the pore size, the porosity and the layer thickness of the inside and outside active layers in the active material layer of the multi-layer structure, the mass and the volume of the gelatinous electrolyte, the mass and the volume of the liquid electrolyte, the mass of the electrolyte salt in the gelatinous electrolyte and the liquid electrolyte, the ratio R_{W} of the mass of the electrolyte salt in the gelatinous electrolyte to the mass of the electrolyte salt in the electrolyte solution of the electrode plates, the ratio R_{W1} of the mass of the electrolyte salt in the gelatinous electrolyte in the pores of the negative electrode active material layer relative to the mass of the electrolyte salt in the electrolyte solution in the pores of the negative electrode active material layer, and the ratio R_{W2} of the mass of the electrolyte salt in the gelatinous electrolyte in the pores of the positive electrode active material layer relative to the mass of the electrolyte salt in the electrolyte solution in the pores of the positive electrode active material layer.

The above parameters were tested and analyzed using FEI Scios 2HiVac device, specifically by: reconstructing the three-dimensional structure of the sample using the nano-spatial dynamic resolution and layerwise sectioning technology of FIB-SEM, analyzing the distribution and proportion of each element by EDS-element energy spectrum, finally analyzing the pore distribution, volume distribution, and mass distribution of each component through quantitative analysis using software, and further obtaining values of parameters such as pore size, porosity, mass, volume, and thickness based on the total mass, total volume, total thickness, and other parameter values of the sample.

To test the above parameters, a to-be-tested sample of an active material layer of an electrode plate was prepared by: discharging the secondary battery to the nominal lower limit voltage, then disassembling the battery cell to obtain the positive electrode plate or the negative electrode plate, and then extracting the to-be-tested sample of the positive electrode active material layer or the negative electrode active material layer.

The nominal lower limit voltage can be obtained by conventional testing or is defined by the manufacturer.

### Test method of performance indicators

### 1. Battery rate

At room temperature of 25°C, a to-be-tested secondary battery was charged to the upper limit voltage at a rate of 1/3 C, and then discharged to the lower limit voltage at 0.33 C and 2 C respectively, to calculate the discharge capacity retention rate of the secondary battery at a rate of 2 C with the discharge capacity at a rate of 0.33 C as the nominal capacity reference group, as shown in Table 1 "Discharge capacity retention rate at a rate of 2C". The discharge capacity retention rate reflects the rate performance of the secondary battery. The larger the value is, the better the rate performance is.

A plurality of substantially identical to-be-tested secondary batteries were prepared using the same method. The upper limit charge voltage and the lower limit discharge voltage can be obtained by conventional testing in the art or is defined by the manufacturer. As an example, the upper limit charge voltage is 4.25, and the lower limit discharge voltage is 2.8V in Example 1.

### 3. Energy density

At room temperature, the to-be-tested secondary battery was charged to the upper limit voltage at a rate of 1/3 C, and then discharged to the lower limit voltage at a rate of 1/3 C to obtain the energy of the secondary battery during the discharge. Mass energy density of the secondary battery (Wh/kg)=energy during discharge of the secondary battery/mass of the secondary battery.

### 4. Cycling performance

At room temperature of 25°C, the to-be-tested secondary battery was charged to the upper limit voltage at a rate of 1/3 C, charged to 0.05 C at a constant voltage, left to stand for 10 min, then discharged to the lower limit voltage at 1/3 C, and left to stand for 10 min. The above charge-discharge process was repeated, the discharge capacity in each cycle process was recorded and compared to the discharge capacity of a previous cycle, and the number of cycles recorded when the capacity decayed to 80% was used as a parameter for assessing the cycling performance, as shown in Table 1 "Number of cycles when the capacity decays to 80% at 25°C". The larger the value is, the longer the cycle life is.

### Test result and analysis

As shown by the structural and composition test and analysis, te gelatinous/liquid composite electrolyte is present in the negative electrode active material layer of the secondary battery prepared in Examples 1-11, the gelatinous/liquid composite electrolyte is present in the positive electrode active material layer of the secondary battery prepared in Examples 12-17, and the gelatinous/liquid composite electrolyte is present in each of the negative electrode active material layer and the positive electrode active material layer of the secondary battery prepared in Example 18. The proportions of the electrolyte salt in the corresponding gelatinous and liquid electrolytes can be found in Table 1.

In Examples 1-18, both the rate performance and the cycling performance are excellent. In Example 18, both the cycling performance and the rate performance are very excellent.

The gelatinous/liquid composite electrolyte was not arranged in each of the positive electrode plate and the negative electrode plate in Comparative Example 1. The cycling performance in Comparative Example 1 is significantly deteriorated compared with that in Examples 1-11 and 18, and the cycling performance in Comparative Example 1 is also deteriorated to a certain extent compared with that in Examples 12-17.

The proportion of the gelatinous electrolyte in the pores of the negative electrode plate in Comparative Example 2 is too high; and compared with Examples 1-11 and 18, not only is the cycling performance deteriorated in Comparative Example 2, but also the cycling performance is very seriously deteriorated in some examples, and the rate performance is also seriously deteriorated.

The proportion of the gelatinous electrolyte in the pores of the positive electrode plate in Comparative Example 3 is too high; and compared with Examples 12-17, in Comparative Example 3, not only is the cycling performance deteriorated, but also the rate performance is deteriorated to a certain extent.

In Comparative Example 4, the gelatinous electrolyte is present, but is mainly distributed outside the electrode plates; the rate performance in Comparative Example 4 is also deteriorated to a certain extent compared with that in Examples 1-18; the cycling performance in Comparative Example 4 is significantly deteriorated compared with that in Examples 1-11 and 18; and the cycling performance in Comparative Example 4 is also deteriorated to a certain extent compared with that in Examples 13-17.

**Table 1.**

| Serial No. | Position of active layer | Proportion of polymerizable monomer in dry weight of negative electrode plate slurry | Rw | b1 | Rw/b1 | Discharge capacity retention rate at a rate of 2C | Number of cycles at 25°C when capacity decays to 80% |
|---|---|---|---|---|---|---|---|
| Example 1 | Monolayer | 1.0% | 1.2 | 39% | 3.1 | 87% | 1328 |
| Example 2 | Monolayer | 1.1% | 1.5 | 40% | 3.8 | 89% | 1381 |
| Example 3 | Monolayer | 1.5% | 4.0 | 41% | 9.8 | 90% | 1515 |
| Example 4 | Monolayer | 1.6% | 6.3 | 42% | 15.0 | 89% | 1480 |
| Example 5 | Monolayer | 1.7% | 8.5 | 41% | 20.7 | 86% | 1426 |
| Example 6 | Monolayer | 1.7% | 8.9 | 40% | 22.3 | 85% | 1396 |
| Example 7 | Monolayer | 1.5% | 3.9 | 15% | 26.0 | 77% | 1092 |
| Example 8 | Monolayer | 1.5% | 4.0 | 24% | 16.7 | 86% | 1403 |
| Example 9 | Monolayer | 1.5% | 3.9 | 49% | 8.0 | 84% | 1337 |
| Example 10 | Upper layer of bilayer | 1.5% | 4.1 | 42% | 9.8 | 90% | 1505 |
| Example 11 | Lower layer of bilayer | 1.5% | 4.0 | 40% | 10.0 | 86% | 1432 |
| Positive electrode plate | Position of active layer | Proportion of polymerizable monomer in dry weight of positive electrode plate slurry | Rw | b2 | Rw/b2 | Discharge capacity retention rate at a rate of 2C | Number of cycles at 25°C when capacity decays to 80% |
| Example 12 | Monolayer | 1.10% | 1.3 | 15% | 8.7 | 85% | 797 |
| Example 13 | Monolayer | 1.20% | 1.6 | 16% | 10.0 | 86% | 884 |
| Example 14 | Monolayer | 1.50% | 4.0 | 17% | 23.5 | 85% | 1053 |
| Example 15 | Monolayer | 1.60% | 6.6 | 15% | 44.0 | 84% | 1109 |
| Example 16 | Monolayer | 1.60% | 8.3 | 15% | 55.3 | 84% | 954 |
| Example 17 | Monolayer | 1.70% | 8.8 | 16% | 55.0 | 82% | 913 |
| Example 18 | Negative electrode plate in Example 3; positive electrode plate in Example 14 | Negative electrode 1.5%; positive electrode 1.5% | Negative electrode 4.0; positive electrode 3.9 | Negative electrode 39%; positive electrode 16% | Negative electrode 10.3; positive electrode 24.4 | 90% | 1602 |
| Comparative Example | Position of active layer | Proportion of polymerizable monomer in dry weight of slurry | Rw | b | Rw/b | Discharge capacity retention rate at a rate of 2C | Number of cycles at 25°C when capacity decays to 80% |
| Comparative Example 1 | Monolayer | 0 | 0 | 40% | 0.0 | 85% | 742 |
| Comparative Example 2 | Monolayer | 1.80% | 9.5 | 42% | 22.6 | 73% | 1024 |
| Comparative Example 3 | Monolayer | 1.80% | 9.5 | 15% | 63.3 | 76% | 773 |
| Comparative Example 4 | Monolayer | Added to electrolyte solution | 0.5 | 40% | 1.25 | 77% | 822 |

The technical features of the above embodiments can be combined in any way. To simplify the description, not all possible combinations of the technical features of the above embodiments are described. However, as long as a combination of these technical features is not contradictory, the combination should be considered to be encompassed within the scope disclosed in the present specification.

It should be noted that the present application is not limited to the above embodiments. The above embodiments are examples only, and any embodiment that has substantially the same constitutions and has the same effects as the technical ideas within the scope of the technical solutions of the present application is encompassed within the technical scope of the present application. The above embodiments merely represent some embodiments of the present application, giving details thereof, but should not be construed as limiting the scope of the patent thereby. In addition, without departing from the scope of the subject matter of the present application, various modifications that can be conceived of by those skilled in the art and are applied to the embodiments, and other embodiments constructed by combining some of the constituent elements of the embodiments are also encompassed within the scope of the present application. It should be noted that those of ordinary skill in the art may further make variations and improvements without departing from the concept of the present application, all of which fall within the scope of protection of the present application. Therefore, the scope of protection of the present application should be determined by the appended claims, and the specification and drawings can be used to explain the contents of the claims.

## Claims

1. A secondary battery, comprising at least two electrode plates, wherein any one of the electrode plates comprises an active material layer arranged on at least one side of the electrode plate; the active material layer on at least one side of at least one of the electrode plates comprises active particles and an intra-plate electrolyte located in pores among the active particles; the intra-plate electrolyte comprises an intra-plate gelatinous electrolyte and an intra-plate electrolyte solution; the intra-plate gelatinous electrolyte and the intra-plate electrolyte solution each independently comprise an electrolyte salt, and a ratio R_{W} of mass of the electrolyte salt in the intra-plate gelatinous electrolyte to mass of the electrolyte salt in the intra-plate electrolyte solution satisfies 1<R_{W}<9.

2. The secondary battery according to claim 1, wherein 1.2≤R_{W}≤8.5; and
optionally, 1.5≤R_{W}≤8.5.

3. The secondary battery according to claim 1 or 2, wherein the active material layer on at least one side of at least one of the electrode plates is a multi-layer structure, and the intra-plate electrolyte is distributed in at least a portion of pores in an outside active layer of the multi-layer structure;
wherein, in the multi-layer structure of the active material layer, the outside active layer is farthest from center of the electrode plate along thickness direction of the electrode plate.

4. The secondary battery according to claim 3, wherein, in the electrode plate having a multi-layer structure, porosity of the outside active layer is higher than porosity of an inside active layer; wherein the inside active layer is located inside the active material layer.

5. The secondary battery according to any one of claims 1 to 4, wherein at least one of the electrode plates is a negative electrode plate, an active material layer of the negative electrode plate is a negative electrode active material layer, and the negative electrode active material layer is located on at least one side of the negative electrode plate.

6. The secondary battery according to claim 5, wherein the negative electrode active material layer comprises a negative electrode active material, the negative electrode active material comprises a silicon-based material;
optionally, mass proportion of the silicon-based material in the negative electrode active material is denoted as silicon content, and the silicon content is greater than or equal to 3%; and
further optionally, the silicon content is 3% to 40%.

7. The secondary battery according to claim 5 or 6, wherein the negative electrode active material layer has the multi-layer structure according to claim 3 or 4, wherein the porosity of the outside active layer is 20% to 50%; further optionally 30% to 50%; and still further optionally 30% to 45%.

8. The secondary battery according to any one of claims 5 to 7, wherein the negative electrode active material layer on any one side independently satisfies 2.4≤R_{W}/b1≤45, wherein b1 is porosity of the negative electrode active material layer on any one side;
optionally, 3.75≤R_{W}/b1≤36; and
further optionally, 7.5≤R_{W}/b1≤18.

9. The secondary battery according to any one of claims 5 to 8, wherein the porosity b1 of the negative electrode active material layer on any one side is independently 20% to 50%;
optionally, the porosity b1 of the negative electrode active material layer on any one side is independently 25% to 45%; and
further optionally, the porosity b1 of the negative electrode active material layer on any one side is independently 25% to 40%.

10. The secondary battery according to any one of claims 1 to 9, wherein at least one of the electrode plates is a positive electrode plate, an active material layer of the positive electrode plate is a positive electrode active material layer, and the positive electrode active material layer is located on at least one side of the positive electrode plate.

11. The secondary battery according to claim 10, wherein the positive electrode active material layer has the multi-layer structure according to claim 3 or 4, wherein the porosity of the outside active layer is 10% to 40%; further optionally 15% to 40%; and still further optionally 20% to 35%.

12. The secondary battery according to claim 10 or 11, wherein the positive electrode active material layer on any one side independently satisfies 3.75≤R_{W}/b2≤90, wherein b2 is porosity of the positive electrode active material layer on any one side;
optionally, 3.75≤R_{W}/b2≤60; and
further optionally, 4.2≤R_{W}/b2≤25.

13. The secondary battery according to any one of claims 11 to 12, wherein the porosity b2 of the positive electrode active material layer on any one side is independently 10% to 40%;
optionally, the porosity b2 of the positive electrode active material layer on any one side is independently 10% to 35%; and
further optionally, the porosity b2 of the positive electrode active material layer on any one side is independently 15% to 35%.

14. The secondary battery according to any one of claims 1 to 13, wherein the secondary battery comprises the positive electrode plate, the negative electrode plate, and a separator arranged between the positive electrode plate and the negative electrode plate;
the positive electrode plate and the negative electrode plate satisfy one or two features below:
the negative electrode plate is as defined in any one of claims 5 to 9; and
the positive electrode plate is defined as in any one of claims 10 to 13.

15. The secondary battery according to claim 14, wherein the positive electrode plate comprises a positive electrode active material layer, the positive electrode active material layer comprises a positive electrode active material, and the positive electrode active material comprises a lithium-ion material; and
optionally, the secondary battery is a lithium-ion secondary battery.

16. The battery cell according to claim 15, wherein the intra-plate electrolyte salt comprises an electrolyte lithium salt;
optionally, the electrolyte lithium salt is at least distributed in one or both of the intra-plate gelatinous electrolyte and the intra-plate electrolyte solution in a same electrode plate;
optionally, the electrolyte lithium salt is at least distributed in pores of the positive electrode active material layer; and
optionally, the negative electrode plate comprises a negative electrode active material layer, and the electrolyte lithium salt is at least distributed in pores of the negative electrode active material layer.

17. An electrical apparatus, comprising the secondary battery according to any one of claims 1 to 16.
